(19) Europäisches Patentamt / European Patent Office / Office européen des brevets

(11) **EP 1 793 522 B1**

(12) **FASCICULE DE BREVET EUROPEEN**

(45) Date de publication et mention
de la délivrance du brevet:
**09.04.2008 Bulletin 2008/15**

(51) Int Cl.:
*H04L 5/02* (2006.01)  *H04L 1/00* (2006.01)

(21) Numéro de dépôt: **06291853.7**

(22) Date de dépôt: **01.12.2006**

(54) **Procédé et dispositif de sélection des paramètres d'étalement d'un système OFDM-CDMA**

Verfahren und Gerät zur Auswahl von Spreizparametern eines OFDM-CDMA-Systems

Method and device for selecting spreading parameters of an OFDM-CDMA system

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.12.2005 FR 0512311**

(43) Date de publication de la demande:
**06.06.2007 Bulletin 2007/23**

(73) Titulaire: **COMMISSARIAT A L'ENERGIE ATOMIQUE**
**75015 Paris (FR)**

(72) Inventeurs:
- **Ktenas, Dimitri**
  **38600 Fontaine (FR)**
- **Bouvier des Noes, Mathieu**
  **38600 Grenoble (FR)**

(74) Mandataire: **Rosenberg, Muriel Sylvie Santarelli,**
**14 avenue de la Grande Armée,**
**B.P. 237**
**75822 Paris Cedex 17 (FR)**

(56) Documents cités:
**EP-A- 1 503 535**

- **MAEDA N ET AL: "Variable spreading factor-OFCDM with two dimensional spreading that prioritizes time domain spreading for forward link broadband wireless access" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, vol. VOL. 1 OF 4. CONF. 57, 22 avril 2003 (2003-04-22), pages 127-132, XP002328610 ISBN: 0-7803-7757-5**
- **JALLON P ET AL: "Asymptotic analysis of the Multiuser MMSE Receiver for the downlink of a MC-CDMA System" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, vol. VOL. 1 OF 4. CONF. 57, avril 2003 (2003-04), pages 363-367, XP002311550 ISBN: 0-7803-7757-5**

**Description**

La présente invention se rapporte à un procédé et à un dispositif de sélection des paramètres d'étalement d'un système OFDM-CDMA (multiplexage par division de fréquences orthogonales - accès multiple à répartition par codes, en anglais *"Orthogonal Frequency Division Multiplexing - Code Division Multiple Access").*

Plus précisément, l'invention a pour objet la sélection des paramètres de l'étalement à deux dimensions pour le lien descendant d'un système multi-porteuses avec un accès multiple de type CDMA. Il s'agit des paramètres d'étalement temporel et fréquentiel, notés respectivement $S_T$ et $S_F$.

L'invention trouve en particulier une application dans le domaine des télécommunications, pour des systèmes de communication exploitant la technique d'accès multiple CDMA combinée à une transmission OFDM, tels que par exemple les systèmes MC-CDMA (accès multiple à répartition par codes - multi-porteuses, en anglais *"Multi-Carrier - Code Division Multiple Access"),* MC-DS-CDMA (accès multiple à répartition par codes - multi-porteuses - séquence directe, en anglais *"Multi-Carrier - Direct Sequence - Code Division Multiple Access")* ou les systèmes à étalement temps/fréquence à deux dimensions (2D).

Dans la suite, le terme générique OFDM-CDMA désigne un système utilisant un étalement temps/fréquence.

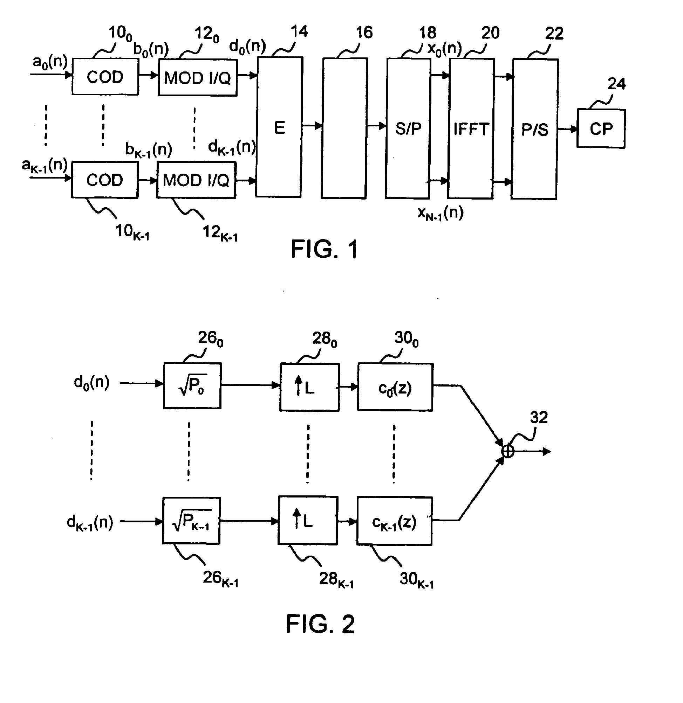

La **figure 1** illustre l'architecture générale d'un émetteur numérique OFDM-CDMA classique pour une liaison descendante d'une station de base vers un terminal mobile.

Les bits $a_0(n)$, ..., $a_{K-1}(n)$ des K utilisateurs sont d'abord envoyés à un module de codage de canal respectif $10_0$, ..., $10_{K-1}$. Le module de codage de canal comprend un encodeur, qui peut être par exemple un codeur de type convolutif, un turbocodeur ou un codeur du type LDPC *("Low-Density Parity-Check Code").* Le module de codage de canal comprend en outre un dispositif de poinçonnage et un entrelaceur bit. Il fournit en sortie des données $b_0(n)$, ..., $b_{K-1}(n)$.

Les données binaires $b_0(n)$, ..., $b_{K-1}(n)$ sont ensuite envoyées à une unité de modulation I/Q respective $12_0$, ..., $12_{K-1}$, qui réalise la modulation des bits encodés, par exemple une modulation d'amplitude en quadrature à 4 états MAQ-4 et fournit en sortie des données $d_0(n)$, ..., $d_{K-1}(n)$.

Les données $d_0(n)$, ..., $d_{K-1}(n)$ des différents utilisateurs sont ensuite traitées par un module d'étalement 14.

Puis les signaux étalés sont traités par un module d'allocation des chips 16, qui les place sur une grille temps/fréquence.

Le signal résultant est alors transmis à un modulateur OFDM, qui comprend successivement une unité de conversion série-parallèle 18, qui fournit en sortie des données $x_0(n)$, ..., $X_{N-1}(n)$, N étant le nombre de sous-porteuses, une unité de transformation de Fourier rapide inverse 20, une unité de conversion parallèle-série 22 et une unité d'insertion de préfixe cyclique 24. Les symboles obtenus sont émis sur un canal de transmission.

Pour une description des techniques classiques de l'OFDM, on se reportera utilement à l'article de W. ZHENDAO et G. B. GIANNAKIS intitulé "Wireless Multicarrier Communications - Where Fourier meets Shannon", IEEE Signal Processing Magazine, vol. 17, n° 3, pages 29 à 48, mai 2000.

La **figure 2** détaille le module d'étalement 14 de l'émetteur. A chaque symbole $d_k(n)$ de l'utilisateur k (k = 0, ..., K-1) est d'abord affectée une amplitude $\sqrt{P_k}$ par un module $26_k$. Puis on procède dans un module $28_k$ à une élévation de cadence d'un facteur L et enfin à un filtrage numérique $c_k(z)$ dans un module $30_k$, les coefficients de filtrage étant égaux aux chips de la séquence d'étalement de l'utilisateur k.

Chaque symbole $d_k(n)$ de l'utilisateur k est étalé par une séquence de L chips $c_k(z)$. Les signaux étalés de tous les utilisateurs sont ensuite additionnés par un module additionneur 32.

Comme décrit plus haut, le module d'allocation des chips 16 répartit les échantillons provenant du module d'étalement 14 sur une grille temps/fréquence. On suppose que le facteur d'étalement L est égal à $S_F \times S_T$, où $S_F$ est le paramètre d'étalement dans le domaine fréquentiel et $S_T$ est le paramètre d'étalement dans le domaine temporel.

Les figures 3 à 5 représentent des grilles temps-fréquence respectivement dans des cas où $S_T$ = 1 (figure 3), $S_F$ = 1 (figure 4) et $S_F$ et $S_T$ sont quelconques (figure 5).

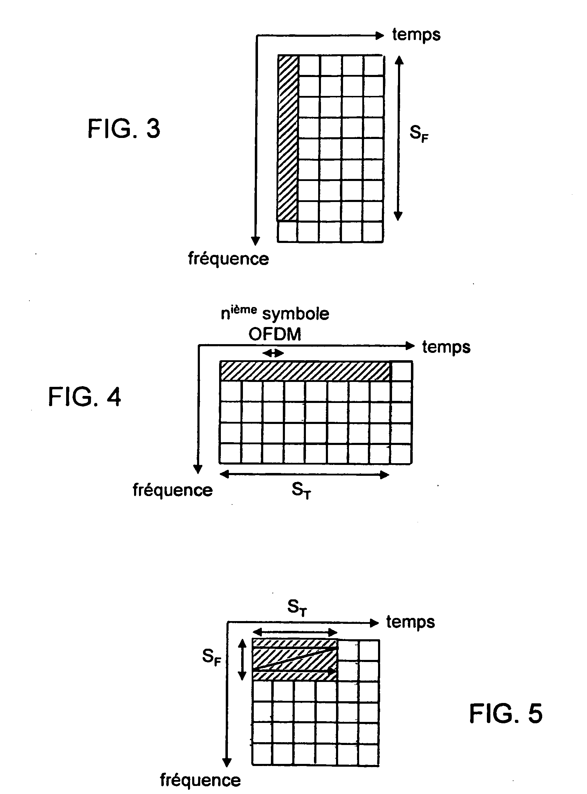

La **figure 3** illustre le cas où $S_T$ = 1. Dans ce cas, on retrouve les caractéristiques d'un système MC-CDMA classique. On transmet F = $N/S_F$ symboles de données par code dans un symbole OFDM.

La **figure 4** illustre le cas où $S_F$ = 1. Dans ce cas, on retrouve les caractéristiques d'un système MC-DS-CDMA classique. On transmet F = N symboles de données par code sur $S_T$ symboles OFDM.

La **figure 5** illustre le cas où $S_F$ et $S_T$ sont quelconques. Dans ce cas, on transmet F = $N/S_F$ symboles de données par code sur $S_T$ symboles OFDM.

Le module d'allocation des chips 16 représenté sur la figure 1 fournit en sortie un vecteur de taille N qui peut s'exprimer suivant l'équation (1), la taille de ce vecteur correspondant à la taille de la transformation de Fourier rapide :

$$x_i[qS_F + p] = \sum_{k=0}^{K-1} \sqrt{P_k}\, d_k[q]c_k[pS_T + i] \tag{1}$$

où :

- $i = 0, ..., S_T\text{-}1$ correspond à l'indice du symbole OFDM,
- $q = 0, ..., F\text{-}1$ correspond à l'indice de la sous-bande,
- $p = 0, ..., S_F\text{-}1$ correspond à l'indice de la sous-porteuse,
- $S_F$ est le facteur d'étalement dans le domaine fréquentiel,
- $S_T$ est le facteur d'étalement dans le domaine temporel,
- $K$ est le nombre total d'utilisateurs,
- $P_k$ est la puissance associée au $k^{ième}$ utilisateur,
- les $d_k$ sont les symboles associés au $k^{ième}$ utilisateur, et
- $C_k$ est le code d'étalement pour le $k^{ième}$ utilisateur.

Après transposition dans le domaine temporel par l'intermédiaire de l'unité de transformation de Fourier rapide inverse 20, un préfixe cyclique est ajouté par l'unité d'insertion de préfixe cyclique 24. Il contient $N_G \geq W\text{-}1$ échantillons, où W est la durée maximale de la réponse impulsionnelle du canal global.

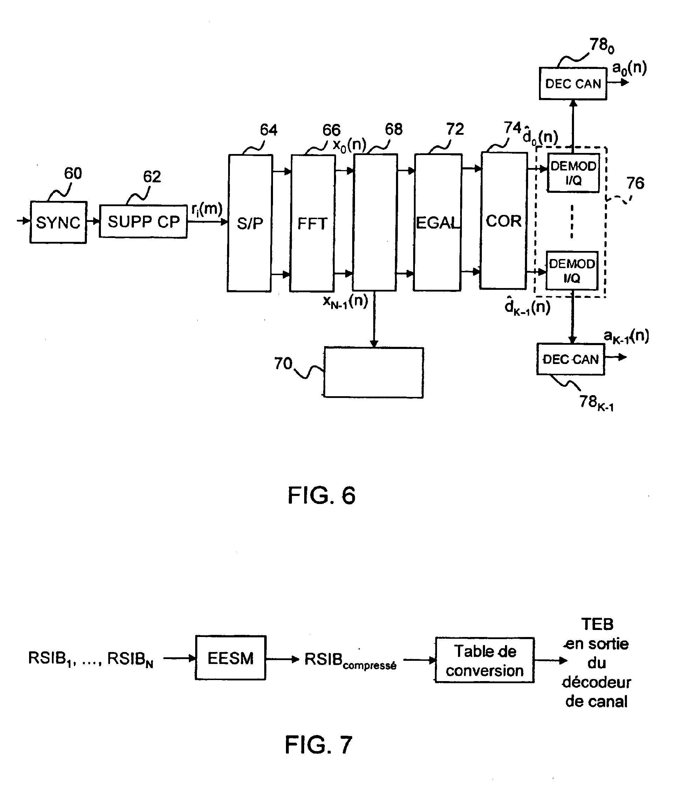

La **figure 6** présente la structure d'un récepteur numérique OFDM-CDMA classique correspondant à l'émetteur illustré sur la figure 1.

Un module de synchronisation grossière 60 effectue, d'une part, la détection du début du symbole OFDM et, d'autre part, l'estimation initiale du décalage $\Delta F$ entre les fréquences porteuses de l'émetteur et du récepteur et du décalage $\Delta T$ entre les horloges d'échantillonnage de l'émetteur et du récepteur.

Cette estimation est dite grossière dans le sens où la variance de l'estimation est élevée. Cela permet d'entrer dans la plage de fonctionnement du récepteur, mais nécessite une correction dite fine, pour atteindre les performances désirées. Ainsi, la synchronisation est réalisée en deux phases.

Après une synchronisation grossière, le préfixe cyclique est éliminé par un module 62 de suppression de préfixe cyclique et le signal est conditionné en vecteurs de N échantillons $r_i(m)$, $m = 0, ..., N\text{-}1$, l'indice i indiquant le numéro du symbole OFDM reçu. Dans la suite, on présente les traitements effectués pour décoder les symboles de l'utilisateur k = 0. Les résultats obtenus sont supposés identiques pour les autres utilisateurs.

Les échantillons $r_i(m)$ sont ensuite fournis à une unité de conversion série-parallèle 64 puis à une unité de transformation de Fourier rapide 66 et une unité d'estimation de canal 68 elle-même reliée à une unité d'estimation des conditions de propagation du canal 70.

L'unité d'estimation de canal 68 est également reliée à un égaliseur linéaire 72 qui applique un coefficient $g_i[qS_F+P]$ par sous-porteuse. L'égaliseur 72 est relié à un module de corrélation 74, qui fournit en sortie les symboles estimés $\hat{d}_0(n),...,\hat{d}_{K-1}(n)$.

On supposera que les coefficients de l'égaliseur linéaire sont calculés indépendamment des codes d'étalement. Il peut s'agir des égaliseurs linéaires MRC (combinaison à rapport maximum, en anglais *"Maximum Ratio Combining"*), EGC (combinaison à gain identique, en anglais *"Equal Gain Combining"*), ZF (forçage à zéro, en anglais *"Zero Forcing"*) ou MMSE (minimisation de l'erreur quadratique moyenne, en anglais *"Minimum Mean Square Error"*), bien connus de l'homme du métier.

Les symboles estimés obtenus en sortie du module de corrélation 74 peuvent s'exprimer suivant l'équation (2) :

$$\hat{d}_0[q] = \sum_{p=0}^{S_F-1}\sum_{i=0}^{S_T-1} g_i[qS_F + p]c_0^*[pS_T + i]x_i[qS_F + p]h_i[qS_F + p]$$
$$+ \sum_{p=0}^{S_F-1}\sum_{i=0}^{S_T-1} g_i[qS_F + p]c_0^*[pS_T + i]w_i[qS_F + p] \tag{2}$$

où :

- $g_i[qS_F+p]$ est le coefficient appliqué par l'égaliseur à la $p^{ième}$ sous-porteuse de la $q^{ième}$ sous-bande du $i^{ième}$ symbole OFDM,
- $c_0$ est le code d'étalement de l'utilisateur 0,

- le signe * désigne le complexe conjugué,
- $x_i[qS_{F+p}]$ correspond aux symboles fournis en sortie par l'unité de transformation de Fourier rapide 66 sur la $p^{ième}$ sous-porteuse de la $q^{ième}$ sous-bande du $i^{ième}$ symbole OFDM,
- $h_i[qS_F+p]$ correspond à l'atténuation du canal pour la $p^{ième}$ sous-porteuse de la $q^{ième}$ sous-bande du $i^{ième}$ symbole OFDM, et
- $w_i[qS_F+P]$ correspond à l'échantillon de bruit blanc additif gaussien de variance $\sigma_2$ sur la $p^{ième}$ sous-porteuse de la $q^{ième}$ sous-bande du $i^{ième}$ symbole OFDM.

Les données sont ensuite envoyées à une unité de démodulation I/Q souple 76. L'opération de démodulation I/Q dite dure consiste à retrouver les valeurs binaires émises à partir des symboles complexes issus du détecteur linéaire. Lorsqu'on utilise un décodeur de canal à entrées souples, les valeurs optimales à injecter dans le décodeur de canal sont des valeurs souples. On parle de valeurs souples dans le sens où ce ne sont pas directement les valeurs dures "0" ou "1". Ainsi, si on utilise une modulation MAQ-16 (4 bits), la démodulation I/Q souple consiste à calculer 4 valeurs souples correspondant aux 4 bits de la modulation MAQ-16. Les valeurs souples (ou métriques) optimales à injecter dans le décodeur de canal à entrées souples correspondent au Logarithme du Rapport de Vraisemblance (LRV).

Après l'opération de démodulation I/Q souple vient le processus de décodage de canal, effectué par des modules $78_0$, ..., $78_{K-1}$. Ces modules réalisent les opérations de désentrelacement bit, de dépoinçonnage et de décodage (par exemple, par un décodeur de Viterbi dans le cas d'un codeur convolutif à l'émission, par l'algorithme Max Log-MAP dans le cas d'un turbocodeur ou par l'algorithme Min-Sum dans le cas d'un codage LDPC). Cela permet de retrouver les données binaires émises.

Dans l'état de la technique, l'unité d'estimation des conditions de propagation du canal 70 permet d'évaluer le Rapport Signal à Interférence + Bruit (RSIB) instantané et/ou l'étalement maximum des retards et/ou la fréquence maximum du Doppler. Ces trois paramètres mesurent les conditions de propagation du canal. Selon les valeurs de ces paramètres renvoyées à l'émetteur par boucle de retour, l'émetteur peut décider d'adapter les paramètres d'étalement $S_F$ et $S_T$ afin d'améliorer la qualité de transmission.

Néanmoins, les méthodes de calcul de l'étalement maximum des retards et de la fréquence Doppler ne sont pas faciles à mettre en oeuvre. Par ailleurs, le RSIB instantané n'est pas un critère optimal dans la sélection des paramètres d'étalement lorsqu'on utilise un processus de codage/décodage de canal.

On présente maintenant la notion de RSIB asymptotique. Lorsque les dimensions du système deviennent grandes en terme de nombre et taille des codes d'étalement, la théorie des matrices aléatoires offre des outils d'analyse très puissants permettant d'obtenir des valeurs explicites du RSIB à la sortie de l'égaliseur, tout en tenant compte de la propriété d'orthogonalité des codes d'étalement. Ce régime asymptotique est néanmoins obtenu pour des valeurs courantes des facteurs d'étalement (par exemple, taille 32).

L'expression du RSIB asymptotique pour l'utilisateur de rang 0 d'un système OFDM-CDMA pour la sous-bande de rang q est donnée par la formule suivante :

$$RSIB_0[q] = \frac{S_0[q]}{I[q] + N[q]} \tag{3}$$

où $S_0[.]$ correspond à la puissance du signal utile après égalisation et corrélation, $I[.]$ correspond à la puissance du bruit d'accès multiple créé par les autres codes d'étalement et $N[.]$ correspond à la puissance du bruit gaussien filtré par l'égaliseur et la séquence d'étalement, avec :

$$S_0[q] = p_0 \left| \frac{1}{L} \sum_{p=0}^{S_F-1} \sum_{i=0}^{S_T-1} g_i[qS_F + p]h_i[qS_F + p] \right|^2 \tag{4}$$

où :

- $p_0$ est la puissance appliquée à l'utilisateur de rang 0,
- $L = S_F \times S_T$,
- $g_i[qSF+p]$ est le coefficient d'égalisation pour la $p^{ième}$ sous-porteuse de la $q^{ième}$ sous-bande pour le $i^{ième}$ symbole OFDM, ce coefficient d'égalisation dépendant du canal de transmission, et
- $h_i[qS_F+p]$ correspond à l'atténuation du canal pour la $p^{ième}$ sous-porteuse de la $q^{ième}$ sous-bande pour le $i^{ième}$ symbole OFDM,

$$I[q] = \alpha \overline{p}\left(\frac{1}{L}\sum_{p=0}^{S_F-1}\sum_{i=0}^{S_T-1}|g_i[qS_F + p]|^2 |h_i[qS_F + p]|^2 - \left|\frac{1}{L}\sum_{p=0}^{S_F-1}\sum_{i=0}^{S_T-1}g_i[qS_F + p]h_i[qS_F + p]\right|^2\right) \quad (5)$$

où :

$\alpha = K/L$ est la charge du système (K étant le nombre total d'utilisateurs), et

$$\overline{p} = \frac{1}{K-1}\sum_{k=1}^{K-1}p_k$$

est la puissance moyenne des codes interférents, et

$$N[q] = \sigma^2\frac{1}{L}\sum_{p=0}^{S_F-1}\sum_{i=0}^{S_T-1}|g_i[qS_F + p]|^2 \qquad\qquad (6)$$

où $\sigma^2$ est la variance du bruit.

Si le système considéré est un système multicellulaire, la variance du bruit $\sigma_2$ contient la puissance du bruit thermique $N_0$ ainsi que la puissance reçue par l'utilisateur de rang 0 provenant des autres stations de base interférentes.

Ces différentes valeurs sont obtenues indépendamment de la valeur des codes d'étalement, tout en tenant compte de la propriété d'orthogonalité des codes.

On montre que le RSIB asymptotique permet d'estimer précisément et facilement le Taux d'Erreur Binaire (TEB) avant codage canal.

Cependant, un système réel emploie un codeur de canal et il convient de prendre en compte son effet sur les performances du système.

L'article de N. MAEDA, Y. KISHIYAMA, H. ATARASHI et M. SAWAHASHI intitulé "Variable Spreading Factor OFCDM with two dimensional spreading that prioritizes time domain spreading for forward link broadband wireless access", VTC Spring 2003, pages 127 à 132, Jeju Island, Corée, avril 2003, met en évidence l'impact du schéma de modulation et de codage sur les performances (TEB) d'un système OFDM-CDMA, en fonction des paramètres du canal de propagation (bande et temps de cohérence du canal) et des paramètres d'étalement $S_F$ et $S_T$.

De plus, dans l'article de N. MAEDA, Y. KISHIYAMA, K. HIGUCHI, H. ATARASHI et M. SAWAHASHI intitulé "Experimental Evaluation of Throughput Performance in Broadband Packet Wireless Access Based on VSF-OFCDM and VSD-CDMA", IEEE PIMRC 2003, pages 6 à 11, l'utilisation du RSIB instantané mesuré par la formule (3) ci-dessus pour sélectionner les paramètres d'étalement $S_F$ et $S_T$ est peu avantageuse, car ce RSIB ne dépend pas des paramètres d'étalement, puisqu'il est obtenu en mesurant la puissance du signal utile et la puissance des interférences et du bruit thermique.

Il ne permet donc pas de sélectionner directement les paramètres d'étalement $S_F$ et $S_T$ optimaux lorsque le système utilise un module de codage/décodage de canal. En effet, il existe plusieurs valeurs de RSIB représentant un même bloc de données codées entrant dans le décodeur de canal. Ces multiples valeurs de RSIB sont dues au fait que le canal de propagation varie en temps et en fréquence à l'intérieur d'un bloc d'information codée. Il est par conséquent inefficace d'optimiser le RSIB donné par la formule (3) car il faut tenir compte du codage canal et de la modulation.

L'invention a pour but de remédier aux inconvénients de l'art antérieur.

Dans ce but, la présente invention propose un procédé de sélection des paramètres d'étalement fréquentiel ($S_F$) et/ou temporel ($S_T$) pour un système de communication incluant un émetteur et un récepteur et utilisant une modulation d'amplitude en quadrature et mettant en oeuvre une technique d'accès multiple à répartition par codes ou CDMA et un multiplexage par division de fréquences orthogonales ou OFDM, dans lequel le domaine des fréquences est découpé en $F = N/S_F$ sous-bandes de $S_F$ sous-porteuses, N étant la taille de la transformation de Fourier rapide utilisée par le récepteur et $S_F$ étant le paramètre d'étalement fréquentiel, et le domaine temporel est découpé en $T = N_S/S_T$ blocs de $S_T$ symboles OFDM, $N_S$ étant le nombre de symboles OFDM utilisés pour coder une trame de données et $S_T$ étant le paramètre d'étalement temporel, ce procédé étant remarquable en ce qu'il comporte des étapes suivant lesquelles :

- on estime les coefficients de l'atténuation du canal de propagation ;

- on détermine, pour l'ensemble des F sous-bandes de $S_F$ sous-porteuses et des T blocs de $S_T$ symboles OFDM, au moins un Rapport Signal à Interférence + Bruit (RSIB) asymptotique, à partir des coefficients de l'atténuation du canal de propagation et du type d'égaliseur utilisé par le récepteur ;
- on en déduit, pour chaque bloc d'information codée obtenu à l'issue de la modulation, le Rapport Signal à Interférence + Bruit asymptotique compressé, qui s'exprime par une formule analytique dépendant des paramètres d'étalement fréquentiel ($S_F$) et temporel ($S_T$) ; et
- on sélectionne les paramètres d'étalement fréquentiel et temporel qui maximisent la valeur du Rapport Signal à Interférence + Bruit asymptotique compressé.

Ainsi, l'optimisation des paramètres d'étalement fréquentiel $S_F$ et temporel $S_T$ se fait par l'intermédiaire du calcul du RSIB asymptotique compressé. Cette optimisation permet d'améliorer la qualité de la transmission entre l'émetteur et le récepteur selon les caractéristiques du canal de propagation, à savoir, la bande de cohérence $B_{coh}$ du canal et le temps de cohérence $T_{coh}$ du canal.

Le RSIB compressé peut par ailleurs être utilisé pour estimer le taux d'erreur binaire ou le taux d'erreur paquet au niveau du récepteur, ce qui indique la qualité de la communication.

Avantageusement, on détermine plusieurs RSIB asymptotiques et en particulier, on détermine tous les RSIB asymptotiques $\gamma(i, j)$ qui figurent dans la formule donnée ci-après du RSIB asymptotique compressé, noté $RSIB_{compressé}$. Cela permet d'obtenir une sélection plus précise des paramètres d'étalement et d'améliorer de ce fait la transmission.

En particulier, lorsque les valeurs du RSIB asymptotique $\gamma(i, j)$ varient beaucoup à l'intérieur du bloc d'information codée obtenu à l'issue de la modulation, il est avantageux d'utiliser toutes ces valeurs (qui sont donc au nombre de $F \times T$) pour calculer le RSIB asymptotique compressé.

En revanche, lorsque les valeurs du RSIB asymptotique $\gamma(i, j)$ varient peu à l'intérieur du bloc d'information codée, il est avantageux de n'utiliser qu'un faible nombre de ces valeurs.

Dans un mode particulier de réalisation, à l'étape de calcul du RSIB asymptotique compressé, on calcule le RSIB asymptotique compressé au moyen de la formule suivante :

$$RSIB_{compressé} = -\lambda \ln\left( \frac{L}{NN_S} \sum_{i=0}^{F-1} \sum_{j=0}^{T-1} e^{-\frac{\gamma(i,j)}{\lambda}} \right)$$

où :

- $\lambda$ est un scalaire connu à l'avance par le récepteur, dépendant de la modulation et du codage, dont le mode d'obtention sera décrit en détail plus loin,
- L est le facteur d'étalement : $L = S_F \times S_T$,
- i et j sont des entiers positifs, et
- $\gamma(i,j)$ est le RSIB asymptotique de la $i^{ème}$ sous-bande du $j^{ème}$ bloc de $S_T$ symboles OFDM.

Dans un mode particulier de réalisation, à l'étape de calcul du RSIB asymptotique compressé, on calcule le RSIB asymptotique compressé de façon itérative en utilisant l'approximation suivante :

$$\ln\left(e^a + e^b\right) \approx \max(a,b) + f_c\left(|a - b|\right)$$

où $f_c\,(|a - b|)$ est une table pré-calculée ne dépendant que de ($|a - b|$) et approchant la fonction $\ln\,(1 + e^{-|a-b|})$.

Cela permet de simplifier le calcul du RSIB asymptotique compressé, en évitant d'effectuer des opérations d'exponentiation et de calcul de logarithmes.

Dans un mode particulier de réalisation, l'étape de sélection consiste à procéder à une recherche exhaustive du couple de paramètres d'étalement fréquentiel et temporel qui maximise la valeur du RSIB asymptotique compressé.

Ce mode de réalisation est particulièrement simple à mettre en oeuvre lorsque le nombre de valeurs du couple de paramètres d'étalement est faible, par exemple, de l'ordre de 10.

En variante, l'étape de sélection consiste à appliquer une méthode de recherche par la section Golden.

Cette variante est particulièrement avantageuse lorsque l'utilisateur se déplace lentement, par exemple à une vitesse de l'ordre de 3 km/h, ou dans le cas où le canal varie peu en fréquence.

Selon une autre variante, l'étape de sélection consiste à appliquer une méthode d'optimisation sous contrainte utilisant la technique du multiplicateur de Lagrange, où la contrainte s'écrit $g(S_F,S_T) = S_F S_T - L$, $S_F$ étant le paramètre d'étalement fréquentiel, $S_T$ étant le paramètre d'étalement temporel et L étant le facteur d'étalement.

Cette variante permet d'obtenir d'excellents résultats en termes de qualité.

Il est à noter que l'ensemble des modes de réalisation présentés ci-dessus sont applicables quel que soit le type d'égaliseur utilisé.

Néanmoins, l'invention propose en outre divers modes particuliers de réalisation dans des cas particuliers d'égaliseurs.

Dans un mode particulier de réalisation, lorsque le procédé conforme à l'invention est mis en oeuvre en liaison avec un récepteur comportant un égaliseur MMSE (minimisation de l'erreur quadratique moyenne, en anglais *"Minimum Mean Square Error"*) mono-utilisateur, le RSIB asymptotique γ(i,j) de la i$^{\text{ème}}$ sous-bande du j$^{\text{ème}}$ bloc de $S_T$ symboles OFDM, pour i = 0, ..., F-1 et j = 0, ..., T-1, est défini par la formule suivante :

$$\gamma(i,j) = \frac{p_0 \cdot \eta^2(i,j)}{\alpha \overline{p}\left( \frac{1}{L}\sum_{p=0}^{S_F-1}\sum_{k=0}^{S_T-1}\frac{\left|h_{j \cdot S_T+k}[i \cdot S_F + p]\right|^4}{\left(\left|h_{j \cdot S_T+k}[i \cdot S_F + p]\right|^2 + \mu\right)^2} - \eta^2(i,j)\right) + \frac{\sigma^2}{L}\sum_{p=0}^{S_F-1}\sum_{k=0}^{S_T-1}\frac{\left|h_{j \cdot S_T+k}[i \cdot S_F + p]\right|^2}{\left(\left|h_{j \cdot S_T+k}[i \cdot S_F + p]\right|^2 + \mu\right)^2}}$$

$$\text{où}\begin{cases} \eta(i,j) = \dfrac{1}{L}\sum_{p=0}^{S_F-1}\sum_{k=0}^{S_T-1}\dfrac{\left|h_{j \cdot S_T+k}[i \cdot S_F + p]\right|^2}{\left|h_{j \cdot S_T+k}[i \cdot S_F + p]\right|^2 + \mu} \\[3mm] \mu = \dfrac{\sigma^2}{\alpha \dfrac{1}{K}\sum_{i=0}^{K-1}p_i} \\[3mm] \overline{p} = \dfrac{1}{K-1}\sum_{i=1}^{K-1}p_i \end{cases}$$

où :

- $p_0$ est la puissance du signal étalé par le code d'étalement dont on souhaite déterminer le RSIB,
- L est le facteur d'étalement : L = $S_F \times S_T$,
- α = K/L est la charge du système, K étant le nombre de codes d'étalement transmis,
- p est la puissance moyenne des codes d'étalement interférents et les $p_i$ sont les puissances des codes d'étalement interférents, avec i#0,
- p et k sont des entiers positifs,
- $h_{j\text{-}S_T+k}[i \cdot S_F + p]$ est l'atténuation du canal de propagation pour la (i·$S_F$+P)$^{\text{ème}}$ sous-porteuse du (j.$S_T$+k)$^{\text{ème}}$ symbole OFDM, et
- $\sigma^2$ est la variance du bruit.

Pour un égaliseur MMSE mono-utilisateur et dans le cas particulier où

$$\frac{1}{K-1}\sum_{i=1}^{K-1}p_i = \frac{1}{K}\sum_{i=0}^{K-1}p_i \, ,$$

le RSIB asymptotique est défini par la relation suivante :

$$\gamma(i,j) = \frac{p_0 \cdot \eta(i,j)}{\alpha \overline{p}(1 - \eta(i,j))}$$

$$\text{où} \begin{cases} \eta(i,j) = \frac{1}{L}\sum_{p=0}^{S_F-1}\sum_{k=0}^{S_T-1}\frac{\left|h_{j\cdot S_T+k}[i\cdot S_F+p]\right|^2}{\left|h_{j\cdot S_T+k}[i\cdot S_F+p]\right|^2 + \mu} \\[3mm] \mu = \frac{\sigma^2}{\alpha\overline{p}} \\[3mm] \overline{p} = \frac{1}{K-1}\sum_{i=1}^{K-1}p_i \end{cases}$$

avec les mêmes notations que précédemment.

Ces modes de réalisation avec égaliseur MMSE permettent de réaliser un compromis entre la réduction de l'interférence d'accès multiple et le rehaussement du niveau de bruit.

Dans un autre mode particulier de réalisation, lorsque le procédé conforme à l'invention est mis en oeuvre en liaison avec un récepteur comportant un égaliseur MRC (combinaison à rapport maximum, en anglais *"Maximum Ratio Combining"*), le RSIB asymptotique $\gamma(i,j)$ de la $i^{\text{ème}}$ sous-bande du $j^{\text{ème}}$ bloc de $S_T$ symboles OFDM, pour $i = 0, ..., F\text{-}1$ et $j = 0, ..., T\text{-}1$, est défini par la formule suivante :

$$\gamma(i,j) = \frac{p_0 \cdot \eta^2(i,j)}{\alpha\overline{p}\left(\frac{1}{L}\sum_{p=0}^{S_F-1}\sum_{k=0}^{S_T-1}\left|h_{j\cdot S_T+k}[i\cdot S_F+p]\right|^4 - \eta^2(i,j)\right) + \sigma^2\eta(i,j)}$$

avec

$$\eta(i,j) = \frac{1}{L}\sum_{p=0}^{S_F-1}\sum_{k=0}^{S_T-1}\left|h_{j\cdot S_T+k}[i\cdot S_F+p]\right|^2,$$

OÙ :

- $p_0$ est la puissance du signal étalé par le code d'étalement dont on souhaite déterminer le RSIB,
- L est le facteur d'étalement : $L = S_F \times S_T$,
- $\alpha = K/L$ est la charge du système, K étant le nombre de codes d'étalement transmis,
- $\overline{p}$ est la puissance moyenne des codes d'étalement interférents,
- p et k sont des entiers positifs,
- $h_{j\cdot S_T+k}[i\cdot S_F + p]$ est l'atténuation du canal de propagation pour la $(i.S_F+P)^{\text{ème}}$ sous-porteuse du $(j.S_T+k)^{\text{ème}}$ symbole OFDM, et
- $\sigma^2$ est la variance du bruit.

Ce mode de réalisation avec égaliseur MRC est particulièrement avantageux dans un contexte mono-utilisateur pour optimiser le rapport signal à bruit en sortie de l'égaliseur.

Dans un autre mode particulier de réalisation, lorsque le procédé conforme à l'invention est mis en oeuvre en liaison avec un récepteur comportant un égaliseur MMSE (minimisation de l'erreur quadratique moyenne, en anglais *"Minimum Mean Square Error"*) multi-utilisateur, le RSIB asymptotique $\gamma(i, j)$ de la $i^{\text{ème}}$ sous-bande du $j^{\text{ème}}$ bloc de $S_T$ symboles OFDM, pour $i = 0, ..., F\text{-}1$ et $j = 0, ..., T\text{-}1$, est solution de l'équation implicite suivante :

$$1 = \frac{1}{L}\sum_{p=0}^{S_F-1}\sum_{k=0}^{S_T-1}\frac{1}{\dfrac{\sigma^2}{\left|h_{j\cdot S_T+k}[i\cdot S_F+p]\right|^2}A(\alpha,p_k,\gamma(i,j)) + \alpha\cdot B(\alpha,p_k,\gamma(i,j))}$$

où:

- L est le facteur d'étalement : $L = S_F \times S_T$,
- $\alpha = K / L$, K étant le nombre de codes d'étalement transmis,
- p et k sont des entiers positifs,
- $h_{j\cdot ST+k}[i\cdot S_F+p]$ est l'atténuation du canal de propagation pour la $(i.S_F+p)^{ième}$ sous-porteuse du $(j.S_T+k)^{ième}$ symbole OFDM, et
- $\sigma^2$ est la variance du bruit,
- $p_k$ est la puissance appliquée au $k^{ième}$ utilisateur, et :

$$A(\alpha,p_k,\gamma(i,j)) = (1-\alpha)\frac{\gamma(i,j)}{p_k} + \alpha\cdot\gamma(i,j)\cdot m(p_k,\gamma(i,j))$$

$$B(\alpha,p_k,\gamma(i,j)) = 1 - p_k\cdot m(p_k,\gamma(i,j))$$

$$m(p_k,\gamma(i,j)) = \int_{-\infty}^{+\infty}\frac{\mu_{power}(u)}{p_k + \gamma(i,j)\cdot u}du$$

où $\mu_{power}(p)$ est la distribution limite de la puissance lorsque L et K tendent vers l'infini et $\alpha = K / L$ reste constant.

Ce mode de réalisation est particulièrement avantageux dans un contexte multi-utilisateurs.

Dans un autre mode particulier de réalisation, lorsque le procédé conforme à l'invention est mis en oeuvre en liaison avec un récepteur comportant un égaliseur EGC (combinaison à gain identique, en anglais "*Equal Gain Combining*"), le RSIB asymptotique $\gamma(i,j)$ de la $i^{ième}$ sous-bande du $j^{ième}$ bloc de $S_T$ symboles OFDM, pour i = 0, ..., F-1 et j = 0, ..., T-1, est défini par la formule suivante :

$$\gamma(i,j) = \frac{p_0\cdot\eta^2(i,j)}{\alpha\overline{p}\left(\dfrac{1}{L}\sum_{p=0}^{S_F-1}\sum_{k=0}^{S_T-1}\left|h_{j\cdot S_T+k}[i\cdot S_F+p]\right|^2 - \eta^2(i,j)\right) + \sigma^2}$$

avec

$$\eta(i,j) = \frac{1}{L}\sum_{p=0}^{S_F-1}\sum_{k=0}^{S_T-1}\left|h_{j\cdot S_T+k}[i\cdot S_F+p]\right|,$$

où :

- $p_0$ est la puissance du signal étalé par le code d'étalement dont on souhaite déterminer le RSIB,
- L est le facteur d'étalement : $L = S_F \times S_T$,
- $\alpha = K/L$ est la charge du système, K étant le nombre de codes d'étalement transmis,

- $\overline{p}$ est la puissance moyenne des codes d'étalement interférents,
- p et k sont des entiers positifs,
- $h_{j \cdot S_T + k}[i \cdot S_F + p]$ est l'atténuation du canal de propagation pour la $(i.S_F+p)^{ième}$ sous-porteuse du $(j.S_T+k)^{ième}$ symbole OFDM, et
- $\sigma^2$ est la variance du bruit.

Sachant que l'égaliseur EGC ne corrige que la phase du signal et permet de conserver l'amplitude de chaque sous-porteuse après égalisation, ce mode de réalisation permet de conserver l'orthogonalité des codes dans un canal à bruit non limité (contrairement à un égaliseur MRC) et ainsi de diminuer le terme d'interférence.

Dans le même but que celui indiqué plus haut, la présente invention propose également un dispositif de sélection des paramètres d'étalement fréquentiel et/ou temporel pour un système de communication incluant un émetteur et un récepteur et utilisant une modulation d'amplitude en quadrature et mettant en oeuvre une technique d'accès multiple à répartition par codes ou CDMA et un multiplexage par division de fréquences orthogonales ou OFDM, dans lequel le domaine des fréquences est découpé en $F = N/S_F$ sous-bandes de $S_F$ sous-porteuses, N étant la taille de la transformation de Fourier rapide utilisée par le récepteur et $S_F$ étant le paramètre d'étalement fréquentiel, et le domaine temporel est découpé en $T = N_S/S_T$ blocs de $S_T$ symboles OFDM, $N_s$ étant le nombre de symboles OFDM utilisés pour coder une trame de données et $S_T$ étant le paramètre d'étalement temporel, ce dispositif étant remarquable en ce qu'il comporte :

- un module pour estimer les coefficients de l'atténuation du canal de propagation ;
- un module pour déterminer, pour l'ensemble des F sous-bandes de $S_F$ sous-porteuses et des T blocs de $S_T$ symboles OFDM, au moins un Rapport Signal à Interférence + Bruit (RSIB) asymptotique, à partir des coefficients de l'atténuation du canal de propagation et du type d'égaliseur utilisé par le récepteur ;
- un module de calcul pour en déduire, pour chaque bloc d'information codée obtenu à l'issue de la modulation, le Rapport Signal à Interférence + Bruit asymptotique compressé, qui s'exprime par une formule analytique dépendant des paramètres d'étalement fréquentiel et temporel ; et
- un module pour sélectionner les paramètres d'étalement fréquentiel et temporel qui maximisent la valeur du Rapport Signal à Interférence + Bruit asymptotique compressé.

Toujours dans le même but, la présente invention propose en outre une unité de simulation d'un système radio-mobile adaptée à mettre en oeuvre un procédé de sélection des paramètres d'étalement tel que ci-dessus.

Toujours dans le même but, la présente invention propose en outre une unité de simulation d'un système radio-mobile comprenant un dispositif de sélection des paramètres d'étalement tel que ci-dessus.

Toujours dans le même but, la présente invention propose également :

- un dispositif de téléphonie mobile sans fil adapté à mettre en oeuvre un procédé de sélection des paramètres d'étalement tel que ci-dessus, et

- un dispositif de téléphonie mobile sans fil comprenant un dispositif de sélection des paramètres d'étalement tel que ci-dessus.

En effet, l'invention peut également s'appliquer à un dispositif de réception tel qu'un téléphone mobile, dans le cadre d'un procédé d'émission et de réception de signaux où des signaux sont transmis par un dispositif transmetteur vers des dispositifs de téléphonie sans fil et où au moins un de ces dispositifs de téléphonie sans fil calcule de la façon décrite plus haut le RSIB asymptotique compressé qui le concerne.

Ce dispositif de téléphonie mobile peut ainsi sélectionner les paramètres d'étalement aptes à optimiser le RSIB asymptotique compressé. Les paramètres d'étalement optimaux sont alors renvoyés au dispositif transmetteur afin d'optimiser la transmission pour ce mobile. Cette optimisation des paramètres d'étalement peut être faite directement au niveau du dispositif transmetteur si le mobile renvoie au transmetteur l'information d'atténuation du canal et le type d'égaliseur utilisé.

Les caractéristiques particulières et les avantages du dispositif de sélection, des unités de simulation d'un système radio-mobile et des dispositifs de téléphonie mobile étant similaires à ceux du procédé de sélection, ils ne sont pas répétés ici.

D'autres aspects et avantages de l'invention apparaîtront à la lecture de la description détaillée qui suit de modes particuliers de réalisation, donnés à titre d'exemples non limitatifs. La description se réfère aux dessins qui l'accompagnent, dans lesquels :

- la figure 1, déjà décrite, représente de façon schématique un émetteur OFDM-CDMA classique ;

- la figure 2, déjà décrite, représente de façon schématique l'architecture du module d'étalement de la figure 1 ;
- les figures 3 à 5, déjà décrites, représentent des grilles temps-fréquence pour diverses valeurs des facteurs d'étalement dans les domaines fréquentiel et temporel ;
- la figure 6, déjà décrite, représente de façon schématique un récepteur OFDM-CDMA classique ;
- la figure 7 est un schéma de principe de la technique EESM ;

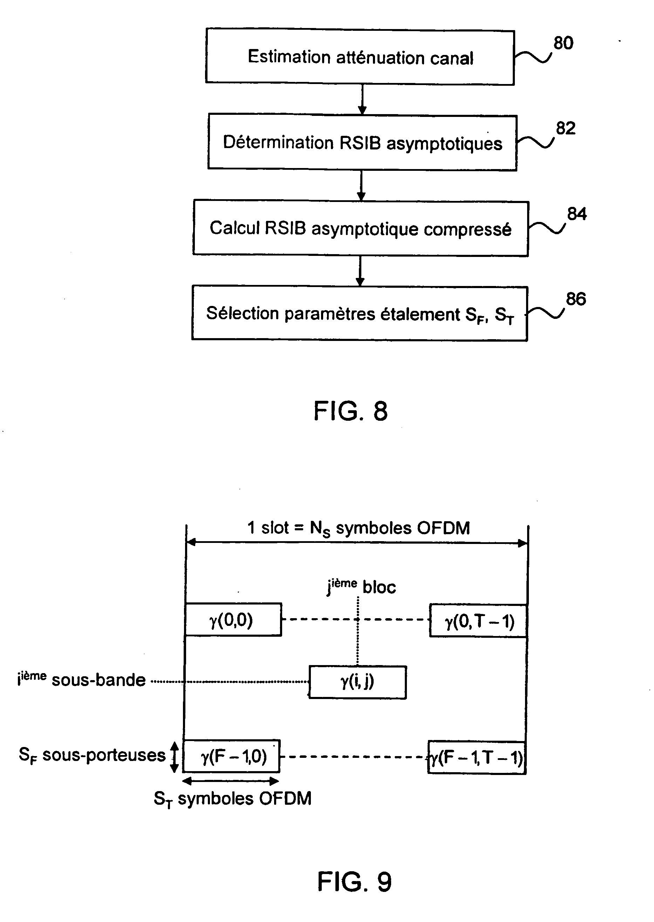

- la figure 8 est un organigramme illustrant les principales étapes d'un procédé de sélection des paramètres d'étalement conforme à la présente invention, dans un mode particulier de réalisation ;
- la figure 9 illustre le découpage en blocs et en sous-bandes d'un "slot", c'est-à-dire du nombre de symboles OFDM utilisés pour coder une trame de données ;

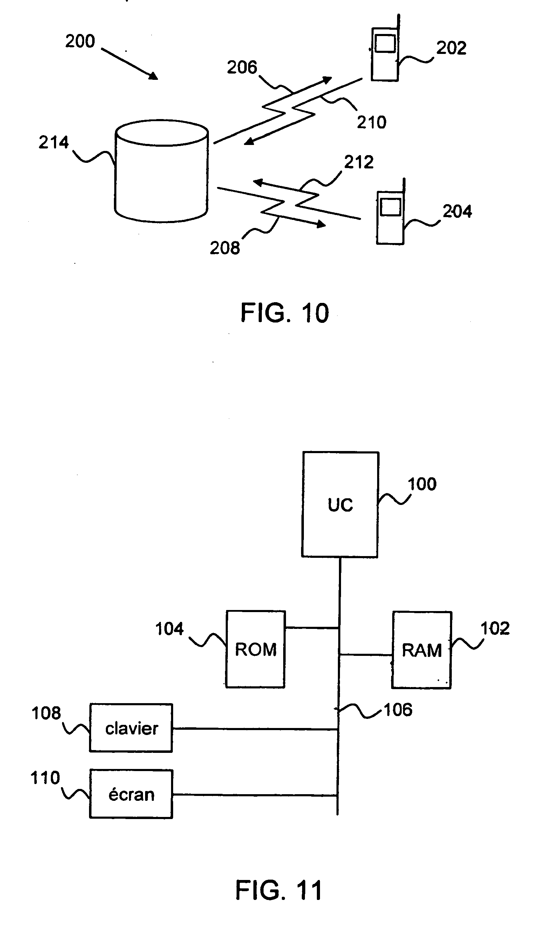

- la figure 10 représente de façon schématique dans un mode particulier de réalisation des dispositifs de téléphonie mobile mettant en oeuvre la présente invention ; et
- la figure 11 représente de façon schématique dans un mode particulier de réalisation une unité susceptible de comporter un simulateur de système radio-mobile mettant en oeuvre la présente invention.

Lors des travaux du 3GPP, une technique appelée *"Effective Exponential SIR Mapping"* (EESM) a été proposée pour trouver un RSIB compressé qui permette d'estimer le TEB en sortie du décodeur de canal. On se reportera utilement à ce sujet aux documents de la société Ericsson intitulés *"Effective SNR mapping for modelling frame error rates in multiple-state channels",* 3GPP2-C30-20030429-010 et *"System-level evaluation of OFDM - further considerations",* TSG-RAN WG1 #35, Lisbonne, Portugal, 17-21 novembre 2003, R1-031303.

Le schéma de principe de l'EESM est illustré sur la **figure 7.** On suppose qu'une trame codée transporte N symboles MAQ (par exemple MAQ-2, dite aussi BPSK, ou MAQ-4, dite aussi QPSK, ou MAQ-16) ayant chacun un RSIB (non asymptotique), noté $RSIB_n$, n = 1, ..., N.

La technique EESM consiste à trouver un unique RSIB, appelé RSIB compressé, qui permette d'estimer le taux d'erreur binaire en sortie du décodeur de canal. Pour cela, on construit une table de conversion qui donne le TEB en sortie du décodeur de canal en fonction du RSIB entrant pour un canal de propagation gaussien. La construction de cette table est réalisée soit par simulation, soit analytiquement lorsque la théorie le permet.

Le RSIB compressé est donné par la formule suivante :

$$RSIB_{compressé} = -\beta \ln\left(\frac{1}{N_{états}} \sum_{i=1}^{N_{états}} \exp\left(-\frac{RSIB_i}{\beta}\right)\right) \qquad (7)$$

où $\beta$ est un paramètre qui dépend du schéma de modulation et de codage et $N_{états}$ représente le nombre d'états du canal sur le bloc d'information codée. Il est à noter que le paramètre $\beta$ peut être obtenu par simulation informatique de la même façon que le paramètre $\lambda$ qui figure dans l'équation (13) donnée plus loin. On se reportera donc à la description détaillée de la méthode d'obtention de $\lambda$.

Conformément à la présente invention, on applique cette technique de compression du RSIB au RSIB asymptotique obtenu dans le cas d'un système OFDM-CDMA par la formule (3) donnée en introduction, de façon à obtenir une valeur de RSIB asymptotique par bloc d'information codée, qui sera appelée RSIB asymptotique compressé.

On suppose que le domaine des fréquences est découpé en $F = N/S_F$ sous-bandes de $S_F$ sous-porteuses, N étant la taille de la transformation de Fourier rapide utilisée par le récepteur et $S_F$ étant le paramètre d'étalement fréquentiel, et le domaine temporel est découpé en $T = N_S/S_T$ blocs de $S_T$ symboles OFDM, $N_S$ étant le nombre de symboles OFDM utilisés pour coder une trame de données et $S_T$ étant le paramètre d'étalement temporel.

Comme le montre l'organigramme de la **figure 8**, dans un mode particulier de réalisation, une première étape 80 du procédé de sélection des paramètres d'étalement consiste à estimer les coefficients hp[n] représentant l'atténuation du canal de propagation pour la $n^{ième}$ sous-porteuse du $p^{ième}$ symbole OFDM, pour p = 1, ..., $N_s$ et n = 1, ..., N.

Puis ces estimées du canal permettent, lors d'une étape 82, de déterminer pour l'ensemble des F sous-bandes de $S_F$ sous-porteuses et des T blocs de $S_T$ symboles OFDM au moins un RSIB asymptotique selon la formule (3).

On suppose que les paramètres suivants sont connus préalablement à la détermination du RSIB asymptotique :

- $\bar{p}$ : puissance moyenne des codes d'étalement interférents,
- $p_0$ : puissance du signal étalé par le code d'étalement dont on souhaite calculer le RSIB,
- $\sigma^2$ : variance du bruit gaussien additif (contenant également la puissance des cellules interférentes dans le cas d'un environnement multicellulaire),
- $h_p[n]$ : atténuation du canal pour la $n^{ième}$ sous-porteuse du $p^{ième}$ symbole OFDM ;
- L : facteur d'étalement, c'est-à-dire longueur des codes d'étalement,
- K : nombre de codes d'étalement transmis,

- N : taille de la transformation de Fourier rapide,
- $N_s$ : taille d'un "slot", c'est-à-dire nombre de symboles OFDM utilisés pour coder une trame de données.

Certains des paramètres ci-dessus sont connus par l'intermédiaire de la signalisation et d'autres peuvent être obtenus avec un mécanisme d'estimation de canal.

Un slot contenant $N_s$ symboles OFDM de N sous-porteuses, il y a $NN_s/L$ RSIB asymptotiques différents, notés $\gamma(i,j)$, à calculer selon l'équation (3). Comme le montre la figure 9, le domaine des fréquences peut être découpé en F = $N/S_F$ sous-bandes de $S_F$ sous-porteuses, tandis que le domaine temporel est découpé en T = $N_S/S_T$ blocs de $S_T$ symboles OFDM. Le RSIB asymptotique $\gamma(i, j)$ est le RSIB de la $i^{ième}$ sous-bande du $j^{ième}$ bloc, i = 0, ..., F-1, j = 0, ..., T-1.

Dans le cas où le procédé de sélection des paramètres d'étalement conforme à la présente invention est mis en oeuvre dans un système d'émission-réception où le récepteur comporte un égaliseur MMSE mono-utilisateur, le RSIB asymptotique $\gamma(i,j)$ est défini par la formule suivante :

$$\gamma(i,j) = \frac{p_0 \cdot \eta^2(i,j)}{\alpha \bar{p}\left(\frac{1}{L}\sum_{p=0}^{S_F-1}\sum_{k=0}^{S_T-1}\frac{\left|h_{jS_T+k}[i \cdot S_F + p]\right|^4}{\left(\left|h_{jS_T+k}[i \cdot S_F + p]\right|^2 + \mu\right)^2} - \eta^2(i,j)\right) + \frac{\sigma^2}{L}\sum_{p=0}^{S_F-1}\sum_{k=0}^{S_T-1}\frac{\left|h_{jS_T+k}[i \cdot S_F + p]\right|^2}{\left(\left|h_{jS_T+k}[i \cdot S_F + p]\right|^2 + \mu\right)^2}}$$

$$où\begin{cases}\eta(i,j) = \frac{1}{L}\sum_{p=0}^{S_F-1}\sum_{k=0}^{S_T-1}\frac{\left|h_{jS_T+k}[i \cdot S_F + p]\right|^2}{\left|h_{jS_T+k}[i \cdot S_F + p]\right|^2 + \mu} \\ \\ \mu = \frac{\sigma^2}{\alpha\frac{1}{K}\sum_{i=0}^{K-1}p_i} \\ \\ \bar{p} = \frac{1}{K-1}\sum_{i=1}^{K-1}p_i\end{cases}$$

où :

- $p_0$ est la puissance du signal étalé par le code d'étalement dont on souhaite déterminer le RSIB,
- L est le facteur d'étalement : L = $S_F \times S_T$,
- $\alpha$ = K/L est la charge du système, K étant le nombre de codes d'étalement transmis,
- $\bar{p}$ est la puissance moyenne des codes d'étalement interférents et les $p_i$ sont les puissances des codes d'étalement interférents, avec i ≠ 0,
- p et k sont des entiers positifs,
- $h_{j \cdot S_T+k}[i.S_F + p]$ est l'atténuation du canal de propagation pour la $(i.S_F+P)^{ième}$ sous-porteuse du $(j.S_T+k)^{ième}$ symbole OFDM, et
- $\sigma^2$ est la variance du bruit.

Toujours pour un égaliseur MMSE mono-utilisateur, dans le cas particulier où $\frac{1}{K-1}\sum_{i=1}^{K-1}p_i = \frac{1}{K}\sum_{i=0}^{K-1}p_i$,

où les $p_i$, pour i # 0, sont les puissances des codes d'étalement interférents, le RSIB asymptotique est défini par la relation suivante :

$$\gamma(i,j) = \frac{p_0 \cdot \eta(i,j)}{\alpha \overline{p}(1 - \eta(i,j))}$$

$$\text{où} \begin{cases} \eta(i,j) = \frac{1}{L}\sum_{p=0}^{S_F-1}\sum_{k=0}^{S_T-1}\frac{\left|h_{j \cdot S_T+k}[i \cdot S_F + p]\right|^2}{\left|h_{j \cdot S_T+k}[i \cdot S_F + p]\right|^2 + \mu} \\ \mu = \frac{\sigma^2}{\alpha \overline{p}} \\ \overline{p} = \frac{1}{K-1}\sum_{i=1}^{K-1}p_i \end{cases} \tag{8}$$

avec les mêmes notations que précédemment.

Pour un égaliseur MRC, le RSIB asymptotique $\gamma(i, j)$ est défini par la formule suivante :

$$\gamma(i,j) = \frac{p_0 \cdot \eta^2(i,j)}{\alpha \overline{p}\left(\frac{1}{L}\sum_{p=0}^{S_F-1}\sum_{k=0}^{S_T-1}\left|h_{j \cdot S_T+k}[i \cdot S_F + p]\right|^4 - \eta^2(i,j)\right) + \sigma^2 \eta(i,j)} \tag{9}$$

où $\eta(i,j) = \frac{1}{L}\sum_{p=0}^{S_F-1}\sum_{k=0}^{S_T-1}\left|h_{j \cdot S_T+k}[i \cdot S_F + p]\right|^2$, avec les mêmes notations que précédemment.

Pour un égaliseur MMSE multi-utilisateur, le RSIB asymptotique $\gamma(i,j)$ est solution de l'équation implicite suivante :

$$1 = \frac{1}{L}\sum_{p=0}^{S_F-1}\sum_{k=0}^{S_T-1}\frac{1}{\frac{\sigma^2}{\left|h_{j \cdot S_T+k}[i \cdot S_F + p]\right|^2}A(\alpha,p_k,\gamma(i,j)) + \alpha \cdot B(\alpha,p_k,\gamma(i,j))} \tag{10}$$

avec les mêmes notations que précédemment et :

$$A(\alpha,p_k,\gamma(i,j)) = (1-\alpha)\frac{\gamma(i,j)}{p_k} + \alpha \cdot \gamma(i,j) \cdot m(p_k,\gamma(i,j))$$

$$B(\alpha,p_k,\gamma(i,j)) = 1 - p_k \cdot m(p_k,\gamma(i,j)) \tag{11}$$

$$m(p_k,\gamma(i,j)) = \int_{-\infty}^{+\infty}\frac{\mu_{power}(u)}{p_k + \gamma(i,j) \cdot u}du$$

où $\mu_{power}(p)$ est la distribution limite de la puissance lorsque la taille L des codes d'étalement et le nombre K de codes d'étalement transmis tendent vers l'infini et $\alpha = K / L$ reste constant. Par exemple, si le système comporte $K_c$ classes de puissance $p_1, ..., p_{Kc}$, alors $\mu_{power}(u) = \sum_{i=0}^{K_c-1}\gamma_i \delta(p - p_i)$, où $\gamma_i$ est le ratio de codes appartenant à la classe i

de puissance $p_i$, et $\delta(.)$ est la distribution de Dirac.

Pour un égaliseur EGC, le RSIB asymptotique est défini par la relation suivante :

$$\gamma(i,j) = \frac{p_0 \cdot \eta^2(i,j)}{\alpha \overline{p}\left(\frac{1}{L}\sum_{p=0}^{S_F-1}\sum_{k=0}^{S_T-1}\left|h_{j\cdot S_T+k}[i\cdot S_F + p]\right|^2 - \eta^2(i,j)\right) + \sigma^2} \qquad (12)$$

avec $\eta(i,j) = \frac{1}{L}\sum_{p=0}^{S_F-1}\sum_{k=0}^{S_T-1}\left|h_{j\cdot S_T+k}[i\cdot S_F + p]\right|$ et les mêmes notations que précédemment.

Après l'étape 82 de détermination des RSIB asymptotiques $\gamma(i,j)$, l'étape 84 consiste à en déduire le RSIB asymptotique compressé, au moyen de la formule suivante :

$$RSIB_{compressé} = -\lambda \ln\left(\frac{L}{NN_S}\sum_{i=0}^{F-1}\sum_{j=0}^{T-1}e^{-\frac{\gamma(i,j)}{\lambda}}\right) \qquad (13)$$

où le scalaire $\lambda$ ne dépend que de la modulation et du schéma de codage (rendement du codeur et entrelaceur bit). En effet, $\lambda$ est indépendant du canal de propagation, de la charge du système et de la combinaison $(S_F, S_T)$.

Les différentes valeurs de $\lambda$ sont connues à l'avance par le récepteur.

Le scalaire $\lambda$ peut être obtenu par simulation informatique. Les simulations requises sont réalisées suivant la procédure suivante. Tout d'abord, pour une trame i d'information codée, on tire un ensemble de réalisations de canal correspondant au modèle de canal considéré. Cela permet, pour la trame i d'information codée, d'obtenir un RSIB asymptotique compressé qu'on notera $RSIB^i_{compressé}(\lambda)$, dépendant de $\lambda$.

Ensuite, à l'aide d'une table (obtenue également par simulation) donnant le Taux d'Erreur Binaire (TEB) à la sortie du décodeur de canal en fonction du RSIB à son entrée pour un canal gaussien, on obtient un Taux d'Erreur Binaire théorique dépendant de $\lambda$, qu'on notera $TEB^i_{théorique}(\lambda)$. Ce TEB théorique dépendant de $\lambda$ est ensuite comparé au TEB réel, noté $TEB^i_{réel}$, mesuré par simulations à la sortie du décodeur de canal.

Afin d'obtenir plusieurs valeurs de $TEB^i_{théorique}(\lambda)$ pour une même valeur de $\lambda$, ces opérations sont répétées sur un grand nombre de trames (par exemple 1000 trames). Chaque $TEB^i_{théorique}(\lambda)$ est ensuite comparé au $TEB^i_{réel}$.

Le scalaire $\lambda$ est alors obtenu par la minimisation, sur l'ensemble des trames d'information codées, de la différence entre $TEB^i_{réel}$ et $TEB^i_{théorique}(\lambda)$.

Le scalaire $\lambda$ dépendant du schéma de modulation et de codage, le processus est répété pour l'ensemble des schémas de modulation et de codage considérés.

L'unité d'estimation des conditions de propagation du canal 70 (voir figure 6) peut donc calculer le RSIB asymptotique compressé pour différents couples $(S_F, S_T)$ et déterminer la combinaison optimale.

Ainsi, à l'étape 86, on sélectionne les valeurs des paramètres d'étalement fréquentiel $S_F$ et temporel $S_T$ qui maximisent le RSIB asymptotique compressé calculé précédemment.

Ce processus d'optimisation du RSIB compressé peut être réalisé de diverses façons.

Pour sélectionner, à l'étape 86, le meilleur couple $(S_F, S_T)$, on peut procéder à une recherche de type exhaustive, en calculant le RSIB asymptotique compressé pour différentes configurations de $S_F$ et $S_T$. Par exemple, si le facteur d'étalement $L = S_F \times S_T$ vaut 32, on peut calculer le RSIB asymptotique compressé pour $(S_F, S_T) \in \{(1,32), (4,8), (8,4), (32,1)\}$. La valeur la plus élevée parmi les quatre valeurs du RSIB ainsi obtenues fournira ainsi la configuration $(S_F, S_T)$ à retenir, pour un couple modulation/codage donné.

En variante, on peut appliquer une méthode de recherche par la section Golden. On se reportera utilement à ce sujet à l'ouvrage de W. H. PRESS, B. P. FLANNERY, S. A. TEUKOLSKY et W. T. VETTERLING publié en 1988 aux éditions Cambridge Press University, intitulé "Numerical Recipes in C" et plus particulièrement à son chapitre 10.1, pages 397 à 402. Il s'agit d'une méthode permettant de réduire l'intervalle de recherche de façon optimale lorsqu'on considère un système à une inconnue, soit le paramètre $S_F$, soit le paramètre $S_T$.

Cette méthode sera avantageusement utilisée dans le cas d'un utilisateur qui se déplace lentement, par exemple à une vitesse de l'ordre de 3 km/h, ou dans le cas où le canal varie peu en fréquence.

Dans le premier cas, où l'utilisateur se déplace lentement, on fixe la valeur du paramètre $S_T$ (par exemple $S_T = 16$) et on recherche $S_F$ par la méthode de Golden. Dans le cas où le canal varie peu en fréquence (par exemple lorsque la bande de cohérence est supérieure à $S_F$), on fixe la valeur de $S_F$ (par exemple $S_F = 16$) et on recherche $S_T$ par la méthode de Golden.

Selon une autre variante, pour sélectionner le meilleur couple $(S_F, S_T)$, on peut appliquer une méthode d'optimisation sous contrainte à l'aide de la technique du multiplicateur de Lagrange, avec pour contrainte $g(S_F, S_T) = S_F S_T - L$. La technique du multiplicateur de Lagrange est bien connue de l'homme du métier ; on pourra en trouver une description sur Internet à l'adresse suivante : http://ocw.mit.edu/NR/rdonlyres/Mathematics/18-466Mathematical-StatisticsSpring2003/F6138C74-AA64-4B63-9A60-38A4833AECCB/0/appf.pdf

La présente invention propose également une simplification du calcul du RSIB asymptotique compressé donné par la formule (13), évitant de calculer les logarithmes et exponentielles des quantités mises en jeu.

Pour cela, on utilise l'approximation suivante :

$$\ln\!\left(e^a + e^b\right) \approx \max(a,b) + f_c\!\left(|a - b|\right) \tag{14}$$

où $f_c(|a-b|)$ est une table pré-calculée ne dépendant que de $(|a-b|)$ et approchant de façon très précise la fonction $\ln(1+e^{-|a-b|})$. On se reportera utilement à ce sujet à l'article de P. ROBERTSON, P. HOEHER et E. VILLEBRUN intitulé "Optimal and sub-optimal maximum a posteriori algorithms suitable for turbo-decoding", European Transactions on Telecommunications, pages 119 à 125, 1997.

Le calcul de l'approximation du RSIB asymptotique compressé se fait donc de façon itérative : en supposant qu'on en connaisse n-1 valeurs, on en déduit la $n^{\text{ième}}$ de la façon suivante :

$$\ln\!\left(e^{a_1} + \cdots + e^{a_n}\right) = \ln\!\left(A + e^{a_n}\right) \text{ avec } A = e^{a_1} + \cdots + e^{a_{n-1}} = e^{\alpha}$$

$$\ln\!\left(e^{a_1} + \cdots + e^{a_n}\right) = \max(\ln(A), a_n) + f_c\!\left(|\ln(A) - a_n|\right) = \max(\alpha, a_n) + f_c\!\left(|\alpha - a_n|\right) \tag{15}$$

L'invention peut être appliquée à un dispositif récepteur tel qu'un téléphone mobile. Comme le montre la figure 10, on considère un système comportant un réseau 200 de diffusion de téléphonie mobile composé d'un serveur de réseau, d'une infrastructure de transmission et d'un parc d'appareils de réception sans fil mobiles ou portables 202, 204, par exemple des téléphones mobiles associés au réseau.

Des messages 206, 208 sont envoyés aux appareils portables 202, 204 tandis que ceux-ci réémettent des informations 210, 212 en retour, par exemple l'information d'atténuation du canal ou les paramètres d'étalement aptes à optimiser la transmission.

Les appareils portables peuvent donc réaliser le calcul du RSIB asymptotique compressé suivant la formule (13) afin de sélectionner les paramètres d'étalement aptes à maximiser ce RSIB asymptotique compressé.

Ces paramètres d'étalement sont ensuite renvoyés à une station de base émettrice 214, qui va pouvoir ajuster divers paramètres d'émission, comme par exemple les paramètres d'étalement ou le schéma de modulation-codage. L'optimisation des paramètres d'étalement peut être faite directement au niveau de l'émetteur si le dispositif mobile renvoie à l'émetteur l'information d'atténuation du canal et le type d'égaliseur utilisé.

La présente invention peut également être appliquée aux simulateurs de systèmes radio-mobiles.

Un tel simulateur système est un logiciel permettant de modéliser un environnement multi-cellulaire afin d'obtenir les performances d'un réseau en termes de débit à l'intérieur d'une cellule, de distribution des débits moyens des utilisateurs à l'intérieur d'une cellule ou de distribution des délais moyens dans la transmission de paquets.

Le simulateur système est implanté dans une unité du type de celle représentée sur la **figure 11** comportant au moins un processeur 100, un ensemble de mémoires RAM 102, pour le stockage des données, et de mémoires ROM 104, par exemple pour le stockage d'instructions du programme. Ces divers éléments sont reliés par un bus 106.

Un élément périphérique tel qu'un clavier 108 permet à l'utilisateur du simulateur système d'entrer des données en réponse à un message affiché sur un écran de visualisation 110. L'utilisateur peut ainsi sélectionner par exemple le modèle de mobilité (position et vitesse du mobile) ou un modèle pour le canal de propagation.

L'intégration du calcul du RSIB asymptotique compressé suivant la formule (13) dans un simulateur système permet non seulement la sélection des paramètres d'étalement optimaux pour un système OFDM-CDMA, mais aussi l'obtention du taux d'erreur paquet après décodage de canal, ce qui est un indicateur de la qualité de la communication.

**Revendications**

1.  Procédé de sélection des paramètres d'étalement fréquentiel ($S_F$) et/ou temporel ($S_T$) pour un système de communication incluant un émetteur et un récepteur et utilisant une modulation d'amplitude en quadrature et mettant en oeuvre une technique d'accès multiple à répartition par codes ou CDMA et un multiplexage par division de fréquences orthogonales ou OFDM, dans lequel le domaine des fréquences est découpé en $F = N/S_F$ sous-bandes de $S_F$ sous-porteuses, N étant la taille de la transformation de Fourier rapide utilisée par le récepteur et $S_F$ étant le paramètre d'étalement fréquentiel, et le domaine temporel est découpé en $T = N_S/S_T$ blocs de $S_T$ symboles OFDM, $N_S$ étant le nombre de symboles OFDM utilisés pour coder une trame de données et $S_T$ étant le paramètre d'étalement temporel, ledit procédé étant **caractérisé en ce qu'**il comporte des étapes suivant lesquelles :

    - on estime (80) les coefficients de l'atténuation du canal de propagation ;
    - on détermine (82), pour l'ensemble des F sous-bandes de $S_F$ sous-porteuses et des T blocs de $S_T$ symboles OFDM, au moins un Rapport Signal à Interférence + Bruit (RSIB) asymptotique, à partir des coefficients de l'atténuation du canal de propagation et du type d'égaliseur utilisé par le récepteur ;
    - on en déduit (84), pour chaque bloc d'information codée obtenu à l'issue de la modulation, le Rapport Signal à Interférence + Bruit asymptotique compressé, qui s'exprime par une formule analytique dépendant desdits paramètres d'étalement fréquentiel ($S_F$) et temporel ($S_T$) : et
    - on sélectionne (86) lesdits paramètres d'étalement fréquentiel ($S_F$) et temporel ($S_T$) qui maximisent la valeur du Rapport Signal à Interférence + Bruit asymptotique compressé.

2.  Procédé selon la revendication 1, **caractérisé en ce qu'**à l'étape (84) de calcul du RSIB asymptotique compressé, on calcule le RSIB asymptotique compressé au moyen de la formule suivante :

$$RSIB_{compressé} = -\lambda \ln\left( \frac{L}{NN_S} \sum_{i=0}^{F-1} \sum_{j=0}^{T-1} e^{-\frac{\gamma(i,j)}{\lambda}} \right)$$

où:

    • $\lambda$ est un scalaire connu à l'avance par le récepteur, dépendant de la modulation et du codage,
    • L est le facteur d'étalement : $L = S_F \times S_T$,
    • i et j sont des entiers positifs, et
    • $\gamma(i, j)$ est le RSIB asymptotique de la $i^{ième}$ sous-bande du $j^{ième}$ bloc de $S_T$ symboles OFDM.

3.  Procédé selon la revendication 2, **caractérisé en ce qu'**à l'étape (84) de calcul du RSIB asymptotique compressé, on calcule le RSIB asymptotique compressé de façon itérative en utilisant l'approximation suivante :

$$\ln\left(e^a + e^b\right) \approx \max(a,b) + f_c\left(|a - b|\right)$$

où $f_c(|a-b|)$ est une table pré-calculée ne dépendant que de ($|a-b|$) et approchant la fonction $\ln(1 + e^{-|a-b|})$.

4.  Procédé selon la revendication 1, 2 ou 3, **caractérisé en ce que** l'étape de sélection (86) consiste à procéder à une recherche exhaustive du couple de paramètres d'étalement fréquentiel et temporel ($S_F,S_T$) qui maximise la valeur du RSIB asymptotique compressé.

5.  Procédé selon la revendication 1, 2 ou 3, **caractérisé en ce que** l'étape de sélection (86) consiste à appliquer une méthode de recherche par la section Golden.

6.  Procédé selon la revendication 1, 2 ou 3, **caractérisé en ce que** l'étape de sélection (86) consiste à appliquer une méthode d'optimisation sous contrainte utilisant la technique du multiplicateur de Lagrange, où la contrainte s'écrit $g(S_F,S_T) = S_F S_T - L$, $S_F$ étant le paramètre d'étalement fréquentiel, $S_T$ étant le paramètre d'étalement temporel et L étant le facteur d'étalement.

**7.** Procédé selon l'une quelconque des revendications précédentes, mis en oeuvre en liaison avec un récepteur comportant un égaliseur MMSE (minimisation de l'erreur quadratique moyenne, en anglais *"Minimum Mean Square Error")* mono-utilisateur, **caractérisé en ce que** le RSIB asymptotique $\gamma(i, j)$ de la $i^{\text{ième}}$ sous-bande du $j^{\text{ième}}$ bloc de $S_T$ symboles OFDM, pour i = 0, ..., F-1 et j = 0, ..., T-1, est défini par la formule suivante :

$$\gamma(i,j) = \frac{p_0 \cdot \eta^2(i,j)}{\alpha\overline{p}\left(\frac{1}{L}\sum_{p=0}^{S_F-1}\sum_{k=0}^{S_T-1}\frac{\left|h_{j\cdot S_T+k}[i \cdot S_F + p]\right|^4}{\left(\left|h_{j\cdot S_T+k}[i \cdot S_F + p]\right|^2 + \mu\right)^2} - \eta^2(i,j)\right) + \frac{\sigma^2}{L}\sum_{p=0}^{S_F-1}\sum_{k=0}^{S_T-1}\frac{\left|h_{j\cdot S_T+k}[i \cdot S_F + p]\right|^2}{\left(\left|h_{j\cdot S_T+k}[i \cdot S_F + p]\right|^2 + \mu\right)^2}}$$

$$\text{où}\begin{cases}\eta(i,j) = \frac{1}{L}\sum_{p=0}^{S_F-1}\sum_{k=0}^{S_T-1}\frac{\left|h_{j\cdot S_T+k}[i \cdot S_F + p]\right|^2}{\left|h_{j\cdot S_T+k}[i \cdot S_F + p]\right|^2 + \mu} \\[4mm] \mu = \dfrac{\sigma^2}{\alpha\frac{1}{K}\sum_{i=0}^{K-1}p_i} \\[4mm] \overline{p} = \frac{1}{K-1}\sum_{i=1}^{K-1}p_i\end{cases}$$

où :

- $p_0$ est la puissance du signal étalé par le code d'étalement dont on souhaite déterminer le RSIB,
- L est le facteur d'étalement : $L = S_F \times S_T$,
- $\alpha = K/L$ est la charge du système, K étant le nombre de codes d'étalement transmis,
- $\overline{p}$ est la puissance moyenne des codes d'étalement interférents et les $p_i$ sont les puissances des codes d'étalement interférents, avec $i \neq 0$,
- p et k sont des entiers positifs,
- $h_{j\cdot ST+k}[i\cdot S_F+p]$ est l'atténuation du canal de propagation pour la $(i.S_F+p)^{\text{ième}}$ sous-porteuse du $(j.S_T+k)^{\text{ième}}$ symbole OFDM, et
- $\sigma^2$ est la variance du bruit.

**8.** Procédé selon la revendication précédente, dans lequel on a $\dfrac{1}{K-1}\sum_{i=1}^{K-1}p_i = \dfrac{1}{K}\sum_{i=0}^{K-1}p_i$, où K est le nombre de codes d'étalement transmis et les $p_i$, pour $i \neq 0$, sont les puissances des codes d'étalement interférents, **caractérisé en ce que** le RSIB asymptotique est défini par la relation suivante :

$$\gamma(i,j) = \frac{p_0 \cdot \eta(i,j)}{\alpha\overline{p}(1 - \eta(i,j))}$$

$$\text{où}\begin{cases}\eta(i,j) = \frac{1}{L}\sum_{p=0}^{S_F-1}\sum_{k=0}^{S_T-1}\frac{\left|h_{j\cdot S_T+k}[i \cdot S_F + p]\right|^2}{\left|h_{j\cdot S_T+k}[i \cdot S_F + p]\right|^2 + \mu} \\[4mm] \mu = \dfrac{\sigma^2}{\alpha\overline{p}} \\[4mm] \overline{p} = \frac{1}{K-1}\sum_{i=1}^{K-1}p_i\end{cases}$$

où:

- $p_0$ est la puissance du signal étalé par le code d'étalement dont on souhaite déterminer le RSIB,
- L est le facteur d'étalement : $L = S_F x S_T$,
- $\alpha = K/L$ est la charge du système,
- $\bar{p}$ est la puissance moyenne des codes d'étalement interférents,
- p et k sont des entiers positifs,
- $h_{j.S_T+k}[i \cdot S_F + p]$ est l'atténuation du canal de propagation pour la $(i.S_F+p)^{ième}$ sous-porteuse du $(j.S_T+k)^{ième}$ symbole OFDM, et
- $\sigma^2$ est la variance du bruit.

9. Procédé selon l'une quelconque des revendications 1 à 6, mis en oeuvre en liaison avec un récepteur comportant un égaliseur MRC (combinaison à rapport maximum, en anglais *"Maximum Ratio Combining"*), **caractérisé en ce que** le RSIB asymptotique $\gamma(i, j)$ de la $i^{ième}$ sous-bande du $j^{ième}$ bloc de $S_T$ symboles OFDM, pour i = 0, ..., F-1 et j =0, ..., T-1, est défini par la formule suivante :

$$\gamma(i,j) = \frac{p_0 \cdot \eta^2(i,j)}{\alpha \bar{p}\left(\frac{1}{L}\sum_{p=0}^{S_F-1}\sum_{k=0}^{S_T-1}\left|h_{j.S_T+k}[i \cdot S_F + p]\right|^4 - \eta^2(i,j)\right) + \sigma^2\eta(i,j)}$$

avec $\eta(i,j) = \frac{1}{L}\sum_{p=0}^{S_F-1}\sum_{k=0}^{S_T-1}\left|h_{j.S_T+k}[i \cdot S_F + p]\right|^2$ ,

où :

- $p_0$ est la puissance du signal étalé par le code d'étalement dont on souhaite déterminer le RSIB,
- L est le facteur d'étalement : $L = S_F \times S_T$,
- $\alpha = K/L$ est la charge du système, K étant le nombre de codes d'étalement transmis,
- $\bar{p}$ est la puissance moyenne des codes d'étalement interférents,
- p et k sont des entiers positifs,
- $h_{j.S_T+k}[i.S_F + p]$ est l'atténuation du canal de propagation pour la $(i.S_F+p)^{iéme}$ sous-porteuse du $(j.S_T+k)^{ième}$ symbole OFDM, et
- $\sigma^2$ est la variance du bruit.

10. Procédé selon l'une quelconque des revendications 1 à 6, mis en oeuvre en liaison avec un récepteur comportant un égaliseur MMSE (minimisation de l'erreur quadratique moyenne, en anglais *"Minimum Mean Square Error"*) multi-utilisateur, **caractérisé en ce que** le RSIB asymptotique $\gamma(i, j)$ de la $i^{ième}$ sous-bande du $j^{ième}$ bloc de $S_T$ symboles OFDM, pour i=0,...,F-1 et j=-0,..., T-1, est solution de l'équation implicite suivante :

$$1 = \frac{1}{L}\sum_{p=0}^{S_F-1}\sum_{k=0}^{S_T-1}\frac{1}{\frac{\sigma^2}{\left|h_{j.S_T+k}[i \cdot S_F + p]\right|^2}A(\alpha,p_k,\gamma(i,j)) + \alpha \cdot B(\alpha,p_k,\gamma(i,j))}$$

où:

- L est le facteur d'étalement : $L = S_F \times S_T$,
- $\alpha = K / L$ , K étant le nombre de codes d'étalement transmis,
- p et k sont des entiers positifs,
- $h_{j.S_T+k}[i \cdot S_F + p]$ est l'atténuation du canal de propagation pour la $(i.S_F+p)^{ième}$ sous-porteuse du $(j.S_T+k)^{ième}$ symbole OfDM, et

• $\sigma^2$ est la variance du bruit,
• $p_k$ est la puissance appliquée au $k^{\text{ième}}$ utilisateur, et :

$$A(\alpha, p_k, \gamma(i,j)) = (1-\alpha)\frac{\gamma(i,j)}{p_k} + \alpha \cdot \gamma(i,j) \cdot m(p_k, \gamma(i,j))$$

$$B(\alpha, p_k, \gamma(i,j)) = 1 - p_k \cdot m(p_k, \gamma(i,j))$$

$$m(p_k, \gamma(i,j)) = \int_{-\infty}^{+\infty} \frac{\mu_{power}(u)}{p_k + \gamma(i,j) \cdot u} du$$

où $\mu_{power}$ (p) est la distribution limite de la puissance lorsque L et K tendent vers l'infini et $\alpha$ = K/L reste constant.

**11.** Procédé selon l'une quelconque des revendications 1 à 6, mis en oeuvre en liaison avec un récepteur comportant un égaliseur EGC (combinaison à gain identique, en anglais *"Equal Gain Combining"*), **caractérisé en ce que** le RSIB asymptotique $\gamma(i,j)$ de la $i^{\text{ème}}$ sous-bande du $j^{\text{ème}}$ bloc de $S_T$ symboles OFDM, pour i = 0, ..., F-1 et j = 0, ..., T-1, est défini par la formule suivante :

$$\gamma(i,j) = \frac{p_0 \cdot \eta^2(i,j)}{\alpha \overline{p} \left( \frac{1}{L} \sum_{p=0}^{S_F-1} \sum_{k=0}^{S_T-1} \left| h_{j \cdot S_T + k}[i \cdot S_F + p] \right|^2 - \eta^2(i,j) \right) + \sigma^2}$$

avec $\eta(i,j) = \dfrac{1}{L} \sum_{p=0}^{S_F-1} \sum_{k=0}^{S_T-1} \left| h_{j \cdot S_T + k}[i \cdot S_F + p] \right|$,

où :

• $p_0$ est la puissance du signal étalé par le code d'étalement dont on souhaite déterminer le RSIB,
• L est le facteur d'étalement : $L = S_F \times S_T$,
• $\alpha$ = K/L est la charge du système, K étant le nombre de codes d'étalement transmis,
• $\overline{p}$ est la puissance moyenne des codes d'étalement interférents,
• p et k sont des entiers positifs,
• $h_{j \cdot S_T + k}[i \cdot S_F + p]$ est l'atténuation du canal de propagation pour la $(i.S_F+p)^{\text{ième}}$ sous-porteuse du $(j.S_T+k)^{\text{ième}}$ symbole OFDM, et
• $\sigma^2$ est la variance du bruit.

**12.** Dispositif de sélection des paramètres d'étalement fréquentiel ($S_F$) et/ou temporel ($S_T$) pour un système de communication incluant un émetteur et un récepteur et utilisant une modulation d'amplitude en quadrature et mettant en oeuvre une technique d'accès multiple à répartition par codes ou CDMA et un multiplexage par division de fréquences orthogonales ou OFDM, dans lequel le domaine des fréquences est découpé en F = $N/S_F$ sous-bandes de $S_F$ sous-porteuses, N étant la taille de la transformation de Fourier rapide utilisé par le récepteur et $S_F$ étant le paramètre d'étalement fréquentiel, et le domaine temporel est découpé en T = $N_S/S_T$ blocs de $S_T$ symboles OFDM, $N_S$ étant le nombre de symboles OFDM utilisés pour coder une trame de données et $S_T$ étant le paramètre d'étalement temporel, ledit dispositif étant **caractérisé en ce qu'**il comporte :

- des moyens pour estimer les coefficients de l'atténuation du canal de propagation ;
- des moyens pour déterminer, pour l'ensemble des F sous-bandes de $S_F$ sous-porteuses et des T blocs de

$S_T$ symboles OFDM, au moins un Rapport Signal à Interférence + Bruit (RSIB) asymptotique, à partir des coefficients de l'atténuation du canal de propagation et du type d'égaliseur utilisé par le récepteur ;
- des moyens (70) de calcul pour en déduire, pour chaque bloc d'information codée obtenu à l'issue de la modulation, le Rapport Signal à Interférence + Bruit asymptotique compressé, qui s'exprime par une formule analytique dépendant desdits paramètres d'étalement fréquentiel ($S_F$) et temporel ($S_T$) ; et
- des moyens pour sélectionner lesdits paramètres d'étalement fréquentiel ($S_F$) et temporel ($S_T$) qui maximisent la valeur du Rapport Signal à Interférence + Bruit asymptotique compressé.

**13.** Dispositif selon la revendication 12, **caractérisé en ce que** les moyens (70) de calcul du RSIB asymptotique compressé sont adaptés à calculer le RSIB asymptotique compressé au moyen de la formule suivante :

$$\text{RSIB}_{\text{compressé}} = -\lambda \ln\left( \frac{L}{NN_s} \sum_{i=0}^{F-1} \sum_{j=0}^{T-1} e^{-\frac{\gamma(i,j)}{\lambda}} \right)$$

où:

- $\lambda$ est un scalaire connu à l'avance par le récepteur, dépendant de la modulation et du codage,
- L est le facteur d'étalement : $L = S_F \times S_T$,
- i et j sont des entiers positifs, et
- $\gamma(i,j)$ est le RSIB asymptotique de la $i^{\text{ième}}$ sous-bande du $j^{\text{ième}}$ bloc de $S_T$ symboles OFDM.

**14.** Dispositif selon la revendication 13, **caractérisé en ce que** les moyens (70) de calcul du RSIB asymptotique compressé sont adaptés à calculer le RSIB asymptotique compressé de façon itérative en utilisant l'approximation suivante :

$$\ln\left(e^a + e^b\right) \approx \max(a,b) + f_c\left(|a - b|\right)$$

où $f_c(|a\text{-}b|)$ est une table pré-calculée ne dépendant que de ($|a\text{-}b|$) et approchant la fonction $\ln(1 + e^{-|a\text{-}b|})$.

**15.** Dispositif selon la revendication 12, 13 ou 14, **caractérisé en ce que** les moyens de sélection sont adaptés à procéder à une recherche exhaustive du couple de paramètres d'étalement fréquentiel et temporel ($S_F$,$S_T$) qui maximise la valeur du RSIB asymptotique compressé.

**16.** Dispositif selon la revendication 12, 13 ou 14, **caractérisé en ce que** les moyens de sélection sont adaptés à appliquer une méthode de recherche par la section Golden.

**17.** Dispositif selon la revendication 12, 13 ou 14, **caractérisé en ce que** les moyens de sélection sont adaptés à appliquer une méthode d'optimisation sous contrainte utilisant la technique du multiplicateur de Lagrange, où la contrainte s'écrit $g(S_F,S_T) = S_F S_T - L$, $S_F$ étant le paramètre d'étalement fréquentiel, $S_T$ étant le paramètre d'étalement temporel et L étant le facteur d'étalement.

**18.** Dispositif selon l'une quelconque des revendications 12 à 17, mis en oeuvre en liaison avec un récepteur comportant un égaliseur MMSE (minimisation de l'erreur quadratique moyenne, en anglais *"Minimum Mean Square Error"*) mono-utilisateur, **caractérisé en ce que** le RSIB asymptotique $\gamma(i, j)$ de la $i^{\text{ième}}$ sous-bande du $j^{\text{ième}}$ bloc de $S_T$ symboles OFDM, pour i = 0, ..., F-1 et j = 0, ..., T-1, est défini par la formule suivante :

$$\gamma(i,j) = \cfrac{p_0 \cdot \eta^2(i,j)}{\alpha \overline{p}\left(\cfrac{1}{L}\displaystyle\sum_{p=0}^{S_F-1}\sum_{k=0}^{S_T-1}\cfrac{\left|h_{j\cdot S_T+k}[i\cdot S_F+p]\right|^4}{\left(\left|h_{j\cdot S_T+k}[i\cdot S_F+p]\right|^2+\mu\right)^2}-\eta^2(i,j)\right)+\cfrac{\sigma^2}{L}\displaystyle\sum_{p=0}^{S_F-1}\sum_{k=0}^{S_T-1}\cfrac{\left|h_{j\cdot S_T+k}[i\cdot S_F+p]\right|^2}{\left(\left|h_{j\cdot S_T+k}[i\cdot S_F+p]\right|^2+\mu\right)^2}}$$

$$\text{où}\begin{cases}\eta(i,j)=\cfrac{1}{L}\displaystyle\sum_{p=0}^{S_F-1}\sum_{k=0}^{S_T-1}\cfrac{\left|h_{j\cdot S_T+k}[i\cdot S_F+p]\right|^2}{\left|h_{j\cdot S_T+k}[i\cdot S_F+p]\right|^2+\mu}\\[2em]\mu=\cfrac{\sigma^2}{\alpha\cfrac{1}{K}\displaystyle\sum_{i=0}^{K-1}p_i}\\[2em]\overline{p}=\cfrac{1}{K-1}\displaystyle\sum_{i=1}^{K-1}p_i\end{cases}$$

où :

- $p_0$ est la puissance du signal étalé par le code d'étalement dont on souhaite déterminer le RSIB,
- L est le facteur d'étalement : $L = S_F \times S_T$,
- $\alpha = K/L$ est la charge du système, K étant le nombre de codes d'étalement transmis,
- $\overline{p}$ est la puissance moyenne des codes d'étalement interférents et les $p_i$ sont les puissances des codes d'étalement interférents, avec $i \neq 0$,
- p et k sont des entiers positifs,
- $h_{j\cdot S_T+k}[i\cdot S_F + p)$ est l'atténuation du canal de propagation pour la $(i.S_F+p)^{ième}$ sous-porteuse du $(j.S_T+k)^{ième}$ symbole OFDM, et
- $\sigma^2$ est la variance du bruit.

19. Dispositif selon la revendication précédente, dans lequel on a $\dfrac{1}{K-1}\displaystyle\sum_{i=1}^{K-1}p_i = \dfrac{1}{K}\displaystyle\sum_{i=0}^{K-1}p_i$,

où K est le nombre de codes d'étalement transmis et les $p_i$, pour $i \neq 0$, sont les puissances des codes d'étalement interférents, **caractérisé en ce que** le RSIB asymptotique est défini par la relation suivante :

$$\gamma(i,j)=\cfrac{p_0\cdot\eta(i,j)}{\alpha\overline{p}\bigl(1-\eta(i,j)\bigr)}$$

$$\text{où}\begin{cases}\eta(i,j)=\cfrac{1}{L}\displaystyle\sum_{p=0}^{S_F-1}\sum_{k=0}^{S_T-1}\cfrac{\left|h_{j\cdot S_T+k}[i\cdot S_F+p]\right|^2}{\left|h_{j\cdot S_T+k}[i\cdot S_F+p]\right|^2+\mu}\\[2em]\mu=\cfrac{\sigma^2}{\alpha\overline{p}}\\[2em]\overline{p}=\cfrac{1}{K-1}\displaystyle\sum_{i=1}^{K-1}p_i\end{cases}$$

où :

- $p_0$ est la puissance du signal étalé par le code d'étalement dont on souhaite déterminer le RSIB,

- L est le facteur d'étalement : $L = S_F \times S_T$,
- $\alpha = K/L$ est la charge du système,
- $\bar{p}$ est la puissance moyenne des codes d'étalement interférents,
- p et k sont des entiers positifs,
- $h_{j \cdot S_T+k}[i \cdot S_F+p]$ est l'atténuation du canal de propagation pour la $(i.S_F+p)^{\text{ième}}$ sous-porteuse du $(j.S_T+k)^{\text{ième}}$ symbole OFDM, et
- $\sigma^2$ est la variance du bruit.

**20.** Dispositif selon l'une quelconque des revendications 12 à 17, mis en oeuvre en liaison avec un récepteur comportant un égaliseur MRC (combinaison à rapport maximum, en anglais *"Maximum Ratio Combining")*, **caractérisé en ce que** le RSIB asymptotique $\gamma(i,j)$ de la $i^{\text{ème}}$ sous-bande du $j^{\text{ème}}$ bloc de $S_T$ symboles OFDM, pour i = 0, ..., F-1 et j = 0, ..., T-1, est défini par la formule suivante :

$$\gamma(i,j) = \frac{p_0 \cdot \eta^2(i,j)}{\alpha \bar{p} \left( \dfrac{1}{L} \displaystyle\sum_{p=0}^{S_F-1} \sum_{k=0}^{S_T-1} \left| h_{j \cdot S_T+k}[i \cdot S_F + p] \right|^4 - \eta^2(i,j) \right) + \sigma^2 \eta(i,j)}$$

avec $\eta(i,j) = \dfrac{1}{L} \displaystyle\sum_{p=0}^{S_F-1} \sum_{k=0}^{S_T-1} \left| h_{j \cdot S_T+k}[i \cdot S_F + p] \right|^2$,

où:

- $p_0$ est la puissance du signal étalé par le code d'étalement dont on souhaite déterminer le RSIB,
- L est le facteur d'étalement : $L = S_F \times S_R$,
- $\alpha = K/L$ est la charge du système, K étant le nombre de codes d'étalement transmis,
- $\bar{p}$ est la puissance moyenne des codes d'étalement interférents,
- p et k sont des entiers positifs,
- $h_{j \cdot S_T+k}[i \cdot S_F + p]$ est l'atténuation du canal de propagation pour la $(i.S_F+p)^{\text{ième}}$ sous-porteuse du $(j.S_T+k)^{\text{ième}}$ symbole OFDM, et
- $\sigma^2$ est la variance du bruit.

**21.** Dispositif selon l'une quelconque des revendications 12 à 17, mis en oeuvre en liaison avec un récepteur comportant un égaliseur MMSE (minimisation de l'erreur quadratique moyenne, en anglais *"Minimum Mean Square Error")* multi-utilisateur, **caractérisé en ce que** le RSIB asymptotique $\gamma(i, j)$ de la $i^{\text{ème}}$ sous-bande du $j^{\text{ème}}$ bloc de $S_T$ symboles OFDM, pour i = 0, ..., F-1 et j = 0, ..., T-1, est solution de l'équation implicite suivante :

$$1 = \frac{1}{L} \sum_{p=0}^{S_F-1} \sum_{k=0}^{S_T-1} \frac{1}{\dfrac{\sigma^2}{\left| h_{j \cdot S_T+k}[i \cdot S_F + p] \right|^2} A(\alpha, p_k, \gamma(i,j)) + \alpha \cdot B(\alpha, p_k, \gamma(i,j))}$$

où:

- L est le facteur d'étalement : $L = S_F \times S_T$,
- $\alpha = K / L$ , K étant le nombre de codes d'étalement transmis,
- p et k sont des entiers positifs,
- $h_{j \cdot S_T+k}[i \cdot S_F+p]$ est l'atténuation du canal de propagation pour la $(i.S_F+p)^{\text{ième}}$ sous-porteuse du $(j.S_T+k)^{\text{ième}}$ symbole OFDM, et
- $\sigma^2$ est la variance du bruit,
- $p_k$ est la puissance appliquée au $k^{\text{ième}}$ utilisateur, et :

$$A(\alpha, p_k, \gamma(i,j)) = (1-\alpha)\frac{\gamma(i,j)}{p_k} + \alpha \cdot \gamma(i,j) \cdot m(p_k, \gamma(i,j))$$

$$B(\alpha, p_k, \gamma(i,j)) = 1 - p_k \cdot m(p_k, \gamma(i,j))$$

$$m(p_k, \gamma(i,j)) = \int_{-\infty}^{+\infty} \frac{\mu_{power}(u)}{p_k + \gamma(i,j) \cdot u} du$$

où $\mu_{power}(p)$ est la distribution limite de la puissance lorsque L et K tendent vers l'infini et $\alpha = K / L$ reste constant.

22. Dispositif selon l'une quelconque des revendications 12 à 17, mis en oeuvre en liaison avec un récepteur comportant un égaliseur EGC (combinaison à gain identique, en anglais *"Equal Gain Combining")*, **caractérisé en ce que** le RSIB asymptotique $\gamma(i,j)$ de la $i^{\text{ième}}$ sous-bande du $j^{\text{ième}}$ bloc de $S_T$ symboles OFDM, pour i = 0, ..., F-1 et j = 0, ..., T-1, est défini par la formule suivante :

$$\gamma(i,j) = \frac{p_0 \cdot \eta^2(i,j)}{\alpha \overline{p}\left(\frac{1}{L}\sum_{p=0}^{S_F-1}\sum_{k=0}^{S_T-1}\left|h_{j \cdot S_T+k}[i \cdot S_F + p]\right|^2 - \eta^2(i,j)\right) + \sigma^2}$$

avec $\eta(i,j) = \frac{1}{L}\sum_{p=0}^{S_F-1}\sum_{k=0}^{S_T-1}\left|h_{j \cdot S_T+k}[i \cdot S_F + p]\right|$,

où :

- $p_0$ est la puissance du signal étalé par le code d'étalement dont on souhaite déterminer le RSIB,
- L est le facteur d'étalement : $L = S_F \times S_T$,
- $\alpha = K/L$ est la charge du système, K étant le nombre de codes d'étalement transmis,
- $\overline{p}$ est la puissance moyenne des codes d'étalement interférents,
- p et k sont des entiers positifs,
- $h_{j \cdot ST+k}[i \cdot S_F+p]$ est l'atténuation du canal de propagation pour la $(i.S_F+p)^{\text{iéme}}$ sous-porteuse du $(j.S_T+k)^{\text{iéme}}$ symbole OFDM, et
- $\sigma^2$ est la variance du bruit.

23. Unité de simulation d'un système radio-mobile, **caractérisée en ce qu'**elle est adaptée à mettre en oeuvre un procédé de sélection des paramètres d'étalement selon l'une quelconque des revendications 1 à 11.

24. Unité de simulation d'un système radio-mobile, **caractérisée en ce qu'**elle comporte un dispositif de sélection des paramètres d'étalement selon l'une quelconque des revendications 12 à 22.

25. Dispositif de téléphonie mobile sans fil, **caractérisé en ce qu'**il est adapté à mettre en oeuvre un procédé de sélection des paramètres d'étalement selon l'une quelconque des revendications 1 à 11.

26. Dispositif de téléphonie mobile sans fil, **caractérisé en ce qu'**il comporte un dispositif de sélection des paramètres d'étalement selon l'une quelconque des revendications 12 à 22.

**Claims**

1. Method of selecting frequency ($S_F$) and/or time ($S_T$) spreading parameters for a communication system including a transmitter and a receiver and using a quadrature amplitude modulation and implementing a code division multiple access (CDMA) technique and orthogonal frequency division multiplexing (OFDM), in which the frequency domain is divided into $F = N/S_F$ sub-bands of $S_F$ subcarriers, N being the size of the fast Fourier transform used by the receiver and $S_F$ being the frequency spreading parameter, and the time domain is divided into $T = N_S/S_T$ blocks of $S_T$ OFDM symbols, $N_S$ being the number of OFDM symbols used to code a data frame and $S_T$ being the time spreading parameter, said method being **characterized in that** it comprises steps according to which:

   - the attenuation coefficients of the propagation channel are estimated (80);
   - for all the F sub-bands of $S_F$ subcarriers and the T blocks of $S_T$ OFDM symbols, at least one asymptotic Signal-to-Interference + Noise Ratio (SINR) is determined (82), based on the attenuation coefficients of the propagation channel and the type of equalizer used by the receiver;
   - from this, for each coded information block obtained from the modulation, the compressed asymptotic Signal-to-Interference + Noise Ratio is deduced (84), expressed by an analytical formula dependent on said frequency ($S_F$) and time ($S_T$) spreading parameters; and
   - said frequency ($S_F$) and time ($S_T$) spreading parameters which maximize the value of the compressed asymptotic Signal-to-Interference + Noise Ratio are selected (86).

2. Method according to claim 1, **characterized in that** in the step (84) for calculating the compressed asymptotic SINR, the compressed asymptotic SINR is calculated using the following formula:

$$SINR_{compressed} = -\lambda \ln\left( \frac{L}{NN_S} \sum_{i=0}^{F-1} \sum_{j=0}^{T-1} e^{-\frac{\gamma(i,j)}{\lambda}} \right)$$

   where:

   - $\lambda$ is a scalar known in advance by the receiver, dependent on the modulation and the coding,
   - L is the spreading factor: $L = S_F x S_T$,
   - i and j are positive integers, and
   - $\gamma(i, j)$ is the asymptotic SINR of the $i^{th}$ sub-band of the $j^{th}$ block of $S_T$ OFDM symbols.

3. Method according to claim 2, **characterized in that**, in the step (84) for calculating the compressed asymptotic SINR, the compressed asymptotic SINR is calculated iteratively using the following approximation:

$$\ln(e^a + e^b) \approx \max(a, b) + f_c(|a-b|)$$

   where $f_c(|a-b|)$ is a pre-calculated table dependent only on ($|a-b|$) and approximating the function $\ln(1+e^{-|a-b|})$ .

4. Method according to claim 1, 2 or 3, **characterized in that** the selection step (86) consists in carrying out an exhaustive search for the pair of frequency and time spreading parameters ($S_F, S_T$) that maximizes the value of the compressed asymptotic SINR.

5. Method according to claim 1, 2 or 3, **characterized in that** the selection step (86) consists in applying a Golden section search method.

6. Method according to claim 1, 2 or 3, **characterized in that** the selection step (86) consists in applying a constrained optimization method using the Lagrange multiplication technique, where the constraint is expressed g ($S_F$, $S_T$) $= S_F S_T - L$, $S_F$ being the frequency spreading parameter, $S_T$ being the time spreading parameter and L being the spreading factor.

7. Method according to any one of the preceding claims, implemented in conjunction with a receiver comprising a single-user MMSE (Minimum Mean Square Error) equalizer, **characterized in that** the asymptotic SINR $\gamma(i, j)$ of

the i$^{th}$ sub-band of the j $^{th}$ block of $S_T$ OFDM symbols, for i=0, ..., F-1 and j=0, ..., T-1, is defined by the following formula:

$$\gamma(i,j) \approx \frac{p_0 \cdot \eta^2(i,j)}{\alpha\overline{p}\left[\frac{1}{L}\sum_{p=0}^{S_F-1}\sum_{k=0}^{S_T-1}\frac{\left|h_{jS_T+k}[i\cdot S_F+p]\right|^4}{\left(\left|h_{jS_T+k}[i\cdot S_F+p]\right|^2+\mu\right)^2}-\eta^2(i,j)\right]+\frac{\sigma^2}{L}\sum_{p=0}^{S_F-1}\sum_{k=0}^{S_T-1}\frac{\left|h_{jS_T+k}[i\cdot S_F+p]\right|^2}{\left(\left|h_{jS_T+k}[i\cdot S_F+p]\right|^2+\mu\right)^2}}$$

$$\text{where}\begin{cases}\eta(i,j)=\dfrac{1}{L}\sum_{p=0}^{S_F-1}\sum_{k=0}^{S_T-1}\dfrac{\left|h_{jS_T+k}[i\cdot S_F+p]\right|^2}{\left|h_{jS_T+k}[i\cdot S_F+p]\right|^2+\mu}\\[4mm]\mu=\dfrac{\sigma^2}{\alpha\dfrac{1}{K}\sum_{i=0}^{K-1}p_i}\\[4mm]\overline{p}=\dfrac{1}{K-1}\sum_{i=1}^{K-1}p_i\end{cases}$$

where:

- $p_0$ is the power of the signal spread by the spreading code for which the SINR is to be determined,
- L is the spreading factor: $L=S_F x S_T$,
- $\alpha=K/L$ is the system load, K being the number of spreading codes transmitted,
- $\overline{p}$ is the average power of the interfering spreading codes and the $p_i$ are the powers of the interfering spreading codes, with i≠0,
- p and k are positive integers,
- $h_{j\cdot S_T+k}$ [i. $S_F$+p] is the attenuation of the propagation channel for the (i. $S_F$+p) $^{th}$ subcarrier of the (j . $S_T$+k) $^{th}$ OFDM symbol, and
- $\sigma^2$ is the variance of the noise.

8. Method according to the preceding claim, in which $\dfrac{1}{K-1}\sum_{i=1}^{K-1}p_i=\dfrac{1}{K}\sum_{i=0}^{K-1}p_i$ applies, where K is the number of spreading codes transmitted and the $p_i$, for i≠0, are the powers of the interfering spreading codes, **characterized in that** the asymptotic SINR is defined by the following relation:

$$\gamma(i,j)=\frac{p_0\cdot\eta(i,j)}{\alpha\overline{p}(1-\eta(i,j))}$$

$$\text{where}\begin{cases}\eta(i,j)=\dfrac{1}{L}\sum_{p=0}^{S_F-1}\sum_{k=0}^{S_T-1}\dfrac{\left|h_{j\cdot S_T+k}[i\cdot S_F+p]\right|^2}{\left|h_{j\cdot S_T+k}[i\cdot S_F+p]\right|^2+\mu}\\[4mm]\mu=\dfrac{\sigma^2}{\alpha\overline{p}}\\[4mm]\overline{p}=\dfrac{1}{K-1}\sum_{i=1}^{K-1}p_i\end{cases}$$

where:

- $p_0$ is the power of the signal spread by the spreading code for which the SINR is to be determined,
- L is the spreading factor: $L=S_F x S_T$,

- $\alpha = K/L$ is the system load,
- $\bar{p}$ is the average power of the interfering spreading codes,
- p and k are positive integers
- $h_{j.S_T+k}[i.S_F+p]$ is the attenuation of the propagation channel for the $(i.S_F+p)^{th}$ subcarrier of the $(j.S_T+k)^{th}$ OFDM symbol, and
- $\sigma^2$ is the variance of the noise.

**9.** Method according to any one of claims 1 to 6, implemented in conjunction with a receiver comprising an MRC (Maximum Ratio Combining) equalizer, **characterized in that** the asymptotic SINR $\gamma(i,j)$ of the $i^{th}$ sub-band of the $j^{th}$ block of $S_T$ OFDM symbols, for i=0, ..., F-1 and j=0, ..., T-1, is defined by the following formula:

$$\gamma(i,j) = \frac{p_0 \cdot \eta^2(i,j)}{\alpha\bar{p}\left(\frac{1}{L}\sum_{p=0}^{S_F-1}\sum_{k=0}^{S_T-1}\left|h_{j\cdot S_T+k}[i\cdot S_F+p]\right|^4 - \eta^2(i,j)\right) + \sigma^2\eta(i,j)}$$

with

$$\eta(i,j) = \frac{1}{L}\sum_{p=0}^{S_F-1}\sum_{k=0}^{S_T-1}\left|h_{j\cdot S_T+k}[i\cdot S_F+p]\right|^2$$

where:

- $p_0$ is the power of the signal spread by the spreading code for which the SINR is to be determined,
- L is the spreading factor: $L=S_F \times S_T$,
- $\alpha = K/L$ is the system load, K being the number of spreading codes transmitted,
- $\bar{p}$ is the average power of the interfering spreading codes,
- p and k are positive integers,
- $h_{j\cdot S_T+k}[i\cdot S_F+p]$ is the attenuation of the propagation channel for the $(i.S_F+p)^{th}$ subcarrier of the $(j.S_T+k)^{th}$ OFDM symbol, and
- $\sigma^2$ is the variance of the noise.

**10.** Method according to any one of claims 1 to 6, implemented in conjunction with a receiver comprising a multi-user MMSE (Minimum Mean Square Error) equalizer, **characterized in that** the asymptotic SINR $\gamma(i,j)$ of the $i^{th}$ sub-band of the $j^{th}$ block of $S_T$ OFDM symbols, for i=0, ..., F-1 and j=0, ..., T-1 is the solution of the following implicit equation:

$$1 = \frac{1}{L}\sum_{p=0}^{S_F-1}\sum_{k=0}^{S_T-1}\frac{1}{\frac{\sigma^2}{\left|h_{j\cdot S_T+k}[i\cdot S_F+p]\right|^2}A(\alpha,p_k,\gamma(i,j)) + \alpha \cdot B(\alpha,p_k,\gamma(i,j))}$$

where:

- L is the spreading factor: $L=S_F \times S_T$,
- $\alpha = K/L$, K being the number of spreading codes transmitted,
- p and k are positive integers,
- $h_{j\cdot S_T+k}[i\cdot S_F+p]$ is the attenuation of the propagation channel for the $(i.S_F+p)^{th}$ subcarrier of the $(j.S_T+k)^{th}$ OFDM symbol, and

• $\sigma^2$ is the variance of the noise,
• $p_k$ is the power applied to the $k^{th}$ user, and:

$$A(\alpha, p_k, \gamma(i,j)) = (1-\alpha)\frac{\gamma(i,j)}{p_k} + \alpha \cdot \gamma(i,j) \cdot m(p_k, \gamma(i,j))$$

$$B(\alpha, p_k, \gamma(i,j)) = 1 - p_k \cdot m(p_k, \gamma(i,j))$$

$$m(p_k, \gamma(i,j)) = \int_{-\infty}^{+\infty} \frac{\mu_{power}(u)}{p_k + \gamma(i,j) \cdot u} du$$

where $\mu_{power}(p)$ is the limit distribution of the power when L and K tend towards infinity and $\alpha=K/L$ remains constant.

**11.** Method according to any one of claims 1 to 6, implemented in conjunction with a receiver comprising an EGC (Equal Gain Combining) equalizer, **characterized in that** the asymptotic SINR $\gamma(i,j)$ of the $i^{th}$ sub-band of the $j^{th}$ block of $S_T$ OFDM symbols, for i=0, ..., F-1 and j=0, ..., T-1, is defined by the following formula:

$$\gamma(i,j) = \frac{p_0 \cdot \eta^2(i,j)}{\alpha\overline{p}\left(\frac{1}{L}\sum_{p=0}^{S_F-1}\sum_{k=0}^{S_T-1}\left|h_{j\cdot S_T+k}[i\cdot S_F+p]\right|^2 - \eta^2(i,j)\right) + \sigma^2}$$

with

$$\eta(i,j) = \frac{1}{L}\sum_{p=0}^{S_F-1}\sum_{k=0}^{S_T-1}\left|h_{j\cdot S_T+k}[i\cdot S_F+p]\right|,$$

where:

• $p_0$ is the power of the signal spread by the spreading code for which the SINR is to be determined,
• L is the spreading factor: $L=S_F \times S_T$,
• $\alpha=K/L$ is the system load, K being the number of spreading codes transmitted,
• $\overline{p}$ is the average power of the interfering spreading codes,
• p and k are positive integers,
• $h_{j\cdot S_T+k}[i\cdot S_F+p]$ is the attenuation of the propagation channel for the $(i.S_F+p)^{th}$ subcarrier of the $(j.S_T+k)^{th}$ OFDM symbol, and
• $\sigma^2$ is the variance of the noise.

**12.** Device for selecting frequency ($S_F$) and/or time ($S_T$) spreading parameters for a communication system including a transmitter and a receiver and using a quadrature amplitude modulation and implementing a code division multiple access (CDMA) technique and an orthogonal frequency division multiplexing (OFDM), in which the frequency domain is divided into $F=N/S_F$ sub-bands of $S_F$ subcarriers, N being the size of the fast Fourier transform used by the receiver and $S_F$ being the frequency spreading parameter, and the time domain is divided into $T=N_S/S_T$ blocks of $S_T$ OFDM symbols, $N_S$ being the number of OFDM symbols used to code a data frame and $S_T$ being the time spreading parameter, said device being **characterized in that** it comprises:

- means for estimating the attenuation coefficients of the propagation channel;
- means for determining, for all the F sub-bands of $S_F$ subcarriers and the T blocks of $S_T$ OFDM symbols, at least one asymptotic Signal-to-Interference + Noise Ratio (SINR), from the coefficients of the attenuation of the propagation channel and the type of equalizer used by the receiver;
- calculation means (70) for deducing from this, for each coded information block obtained from the modulation, the compressed asymptotic Signal-to-Interference + Noise Ratio, which is expressed by an analytical formula dependent on said frequency ($S_F$) and time ($S_T$) spreading parameters; and
- means for selecting said frequency ($S_F$) and time ($S_T$) spreading parameters which maximize the value of the compressed asymptotic Signal-to-Interference + Noise Ratio.

13. Device according to claim 12, **characterized in that** the means (70) of calculating the compressed asymptotic SINR are suitable for calculating the compressed asymptotic SINR by means of the following formula:

$$\text{SINR}_{compressed} = -\lambda \ln\left(\frac{L}{NN_S}\sum_{i=0}^{F-1}\sum_{j=0}^{T-1}e^{-\frac{\gamma(i,j)}{\lambda}}\right)$$

where:

- $\lambda$ is a scalar known in advance by the receiver, dependent on the modulation and the coding,
- L is the spreading factor: $L = S_F \times S_T$,
- i and j are positive integers, and
- $\gamma(i,j)$ is the asymptotic SINR of the $i^{th}$ sub-band of the $j^{th}$ block of $S_T$ OFDM symbols.

14. Device according to claim 13, **characterized in that** the means (70) of calculating the compressed asymptotic SINR are suitable for calculating the compressed asymptotic SINR iteratively by using the following approximation:

$$\ln(e^a + e^b) \approx \max(a,b) + f_c(|a-b|)$$

where $f_c$(la-bl) is a pre-calculated table dependent only on (|a-b|) and approximating the function In (1+e$^{-|a-b|}$) .

15. Device according to claim 12, 13 or 14, **characterized in that** the selection means are suitable for carrying out an exhaustive search for the pair of frequency and time spreading parameters ($S_F$, $S_T$) that maximizes the value of the compressed asymptotic SINR.

16. Device according to claim 12, 13 or 14, **characterized in that** the selection means are suitable for applying a Golden section search method.

17. Device according to claim 12, 13 or 14, **characterized in that** the selection means are suitable for applying a constrained optimization method using the Lagrange multiplication technique, where the constraint is expressed g ($S_F$, $S_T$) - $S_F S_T$ - L, $S_F$ being the frequency spreading parameter, $S_T$ being the time spreading parameter and L being the spreading factor.

18. Device according to any one of claims 12 to 17, implemented in conjunction with a receiver comprising a single-user MMSE (Minimum Mean Square Error) equalizer, **characterized in that** the asymptotic SINR $\gamma(i,j)$ of the $i^{th}$ sub-band of the $j^{th}$ block of $S_T$ OFDM symbols, for i=0, ..., F-1 and j=0, ..., T-1, is defined by the following formula:

$$\gamma(i,j) = \cfrac{p_0 \cdot \eta^2(i,j)}{\alpha\overline{p}\left(\cfrac{1}{L}\sum_{p=0}^{S_F-1}\sum_{k=0}^{S_T-1}\cfrac{\left|h_{j\cdot S_T+k}[i\cdot S_F+p]\right|^4}{\left(\left|h_{j\cdot S_T+k}[i\cdot S_F+p]\right|^2+\mu\right)^2} - \eta^2(i,j)\right) + \cfrac{\sigma^2}{L}\sum_{p=0}^{S_F-1}\sum_{k=0}^{S_T-1}\cfrac{\left|h_{j\cdot S_T+k}[i\cdot S_F+p]\right|^2}{\left(\left|h_{j\cdot S_T+k}[i\cdot S_F+p]\right|^2+\mu\right)^2}}$$

$$\text{where}\begin{cases} \eta(i,j) = \cfrac{1}{L}\sum_{p=0}^{S_F-1}\sum_{k=0}^{S_T-1}\cfrac{\left|h_{j\cdot S_T+k}[i\cdot S_F+p]\right|^2}{\left|h_{j\cdot S_T+k}[i\cdot S_F+p]\right|^2+\mu} \\[3ex] \mu = \cfrac{\sigma^2}{\alpha\cfrac{1}{K}\sum_{i=0}^{K-1}p_i} \\[3ex] \overline{p} = \cfrac{1}{K-1}\sum_{i=1}^{K-1}p_i \end{cases}$$

where:

- $p_0$ is the power of the signal spread by the spreading code for which the SINR is to be determined,
- L is the spreading factor: $L=S_F\mathrm{x}S_T$,
- $\alpha=K/L$ is the system load, K being the number of spreading codes transmitted,
- $\overline{p}$ is the average power of the interfering spreading codes and the $p_i$ are the powers of the interfering spreading codes, with $i\neq0$,
- p and k are positive integers,
- $h_{j\cdot S_T+k}[i\cdot S_F+p]$ is the attenuation of the propagation channel for the (i. $S_F$+p) th subcarrier of the (j. $S_T$+k)th OFDM symbol, and
- $\sigma^2$ is the variance of the noise.

**19.** Device according to the preceding claim, in which $\cfrac{1}{K-1}\sum_{i=1}^{K-1}p_i = \cfrac{1}{K}\sum_{i=0}^{K-1}p_i$ applies, where K is the number of spreading codes transmitted and the $p_i$, for $i\neq0$, are the powers of the interfering spreading codes, **characterized in that** the asymptotic SINR is defined by the following relation:

$$\gamma(i,j) = \cfrac{p_0 \cdot \eta(i,j)}{\alpha\overline{p}\big(1-\eta(i,j)\big)}$$

$$\text{where}\begin{cases} \eta(i,j) = \cfrac{1}{L}\sum_{p=0}^{S_F-1}\sum_{k=0}^{S_T-1}\cfrac{\left|h_{j\cdot S_T+k}[i\cdot S_F+p]\right|^2}{\left|h_{j\cdot S_T+k}[i\cdot S_F+p]\right|^2+\mu} \\[3ex] \mu = \cfrac{\sigma^2}{\alpha\overline{p}} \\[3ex] \overline{p} = \cfrac{1}{K-1}\sum_{i=1}^{K-1}p_i \end{cases}$$

where:

- $p_0$ is the power of the signal spread by the spreading code for which the SINR is to be determined,
- L is the spreading factor: $L=S_F\mathrm{x}S_T$,
- $\alpha=K/L$ is the system load,
- $\overline{p}$ is the average power of the interfering spreading codes,
- p and k are positive integers,
- $h_{j,S_T+k}[i\cdot S_F+p]$ is the attenuation of the propagation channel for the (i . $S_F$+p) th subcarrier of the (j . $S_T$+k) th

OFDM symbol, and
• $\sigma^2$ is the variance of the noise.

20. Device according to any one of claims 12 to 17, implemented in conjunction with a receiver comprising an MRC (Maximum Ratio Combining) equalizer, **characterized in that** the asymptotic SINR $\gamma(i,j)$ of the $i^{th}$ sub-band of the $j^{th}$ block of $S_T$ OFDM symbols, for i=0, ..., F-1 and j=0, ..., T-1, is defined by the following formula:

$$\gamma(i,j) = \frac{\overline{p_0 \cdot \eta^2(i,j)}}{\alpha\overline{p}\left(\frac{1}{L}\sum_{p=0}^{S_F-1}\sum_{k=0}^{S_T-1}\left|h_{j\cdot S_T+k}[i\cdot S_F + p]\right|^4 - \eta^2(i,j)\right) + \sigma^2\eta(i,j)}$$

with

$$\eta(i,j) = \frac{1}{L}\sum_{p=0}^{S_F-1}\sum_{k=0}^{S_T-1}\left|h_{j\cdot S_T+k}[i\cdot S_F + p]\right|^2$$

where:

• $p_0$ is the power of the signal spread by the spreading code for which the SINR is to be determined,
• L is the spreading factor: $L=S_F x S_T$,
• $\alpha$=K/L is the system load, K being the number of spreading codes transmitted,
• $\overline{p}$ is the average power of the interfering spreading codes,
• p and k are positive integers,
• $h_{j\cdot S_T+k}$ [i. $S_F$+p] is the attenuation of the propagation channel for the (i. $S_F$+p) $^{th}$ subcarrier of the (j . $S_T$+k) $^{th}$ OFDM symbol, and
• $\sigma^2$ is the variance of the noise.

21. Device according to any one of claims 12 to 17, implemented in conjunction with a receiver comprising a multi-user MMSE (Minimum Mean Square Error) equalizer, **characterized in that** the asymptotic SINR $\gamma(i,j)$ of the $i^{th}$ sub-band of the $j^{th}$ block of $S_T$ OFDM symbols, for i=0, ..., F-1 and j=0, ..., T-1, is the solution of the following implicit equation:

$$1 = \frac{1}{L}\sum_{p=0}^{S_F-1}\sum_{k=0}^{S_T-1}\frac{1}{\frac{\sigma^2}{\left|h_{j\cdot S_T+k}[i\cdot S_F + p]\right|^2}A(\alpha,p_k,\gamma(i,j)) + \alpha \cdot B(\alpha,p_k,\gamma(i,j))}$$

where:

• L is the spreading factor: $L=S_F x S_T$,
• $\alpha$=K/L, K being the number of spreading codes transmitted,
• p and k are positive integers,
• $h_{j\cdot S_T+k}$ [i·$S_F$+p] is the attenuation of the propagation channel for the (i. $S_F$+p) $^{th}$ subcarrier of the (j . $S_T$+k) $^{th}$ OFDM symbol, and
• $\sigma^2$ is the variance of the noise,
• $p_k$ is the power applied to the $k^{th}$ user, and:

$$A(\alpha, p_k, \gamma(i,j)) = (1-\alpha)\frac{\gamma(i,j)}{p_k} + \alpha \cdot \gamma(i,j) \cdot m(p_k, \gamma(i,j))$$

$$B(\alpha, p_k, \gamma(i,j)) = 1 - p_k \cdot m(p_k, \gamma(i,j))$$

$$m(p_k, \gamma(i,j)) = \int_{-\infty}^{+\infty} \frac{\mu_{power}(u)}{p_k + \gamma(i,j) \cdot u} du$$

where $\mu_{power}(p)$ is the limit distribution of the power when L and K tend towards infinity and $\alpha = K/L$ remains constant.

22. Device according to any one of claims 12 to 17, implemented in conjunction with a receiver comprising an EGC (Equal Gain Combining) equalizer, **characterized in that** the asymptotic SINR $\gamma(i,j)$ of the $i^{th}$ sub-band of the $j^{th}$ block of $S_T$ OFDM symbols, for i=0, ..., F-1 and j=0, ..., T-1, is defined by the following formula:

$$\gamma(i,j) = \frac{p_0 \cdot \eta^2(i,j)}{\alpha\overline{p}\left(\frac{1}{L}\sum_{p=0}^{S_F-1}\sum_{k=0}^{S_T-1}\left|h_{j\cdot S_T+k}[i\cdot S_F + p]\right|^2 - \eta^2(i,j)\right) + \sigma^2}$$

with

$$\eta(i,j) = \frac{1}{L}\sum_{p=0}^{S_F-1}\sum_{k=0}^{S_T-1}\left|h_{j\cdot S_T+k}[i\cdot S_F + p]\right|$$

where:

- $p_0$ is the power of the signal spread by the spreading code for which the SINR is to be determined,
- L is the spreading factor: $L = S_F x S_T$,
- $\alpha = K/L$ is the system load, K being the number of spreading codes transmitted,
- $\overline{p}$ is the average power of the interfering spreading codes,
- p and k are positive integers,
- $h_{j\cdot S_T+k}[i\cdot S_F+p]$ is the attenuation of the propagation channel for the $(i.S_F+p)^{th}$ subcarrier of the $(j.S_T+k)^{th}$ OFDM symbol, and
- $\sigma^2$ is the variance of the noise.

23. Radio-mobile system simulation unit, **characterized in that** it is suitable for implementing a method of selecting spreading parameters according to any one of claims 1 to 11.

24. Radio-mobile system simulation unit, **characterized in that** it comprises a device for selecting spreading parameters according to any one of claims 12 to 22.

25. Wireless mobile telephony device, **characterized in that** it is suitable for implementing a method of selecting spreading parameters according to any one of claims 1 to 11.

26. Wireless mobile telephony device, **characterized in that** it comprises a device for selecting spreading parameters according to any one of claims 12 to 22.

EP 1 793 522 B1

**Patentansprüche**

1. Verfahren zum Wählen der Frequenzspreizparameter ($S_F$) und/oder Zeitspreizparameter ($S_T$) für ein einen Sender und einen Empfänger enthaltendes Kommunikationssystem, das eine Quadraturamplitudenmodulation verwendet und eine Technik des Mehrfachzugriffs durch Code-Teilung oder CDMA und eine Multiplexierung mit orthogonaler Frequenzteilung oder OFDM einsetzt, bei dem die Domäne der Frequenzen in $F = N/S_F$ Unterbänder von $S_F$ Unterträgern zerschnitten ist, wobei N die Größe der von dem Empfänger verwendeten schnellen Fourier-Transformation ist und $S_F$ der Frequenzspreizparameter ist, und die Zeitdomäne in $T = N_S/S_T$ Blöcke von $S_T$ OFDM-Symbolen zerschnitten ist, wobei $N_S$ die Anzahl von OFDM-Symbolen ist, die zum Codieren eines Datenblocks verwendet werden, und $S_T$ der Zeitspreizparameter ist, wobei dieses Verfahren **dadurch gekennzeichnet ist, dass** es Schritte umfasst, in denen:

   - man die Koeffizienten der Dämpfung des Fortpflanzungskanals schätzt (80);
   - man für die Menge der F Unterbänder von $S_F$ Unterträgern und T Blöcken von $S_T$ OFDM-Symbolen mindestens ein asymptotisches Verhältnis Signal zu Interferenz + Rauschen (RSIB) aus den Koeffizienten der Dämpfung des Fortpflanzungskanals und dem von dem Empfänger verwendeten Entzerrertyp bestimmt (82);
   - man davon für jeden nach der Modulation erhaltenen codierten Informationsblock das komprimierte asymptotische Verhältnis Signal zu Interferenz + Rauschen ableitet, das durch eine analytische Formel ausgedrückt wird, die von den Frequenzspreizparametern ($S_F$) und Zeitspreizparametern ($S_T$) abhängt; und
   - man die Frequenzspreizparameter ($S_F$) und Zeitspreizparameter ($S_T$) wählt, die den Wert des komprimierten asymptotischen Verhältnisses Signal zu Interferenz + Rauschen maximieren.

2. Verfahren nach Anspruch 1, **dadurch gekennzeichnet, dass** man im Schritt (84) der Berechnung des komprimierten asymptotischen RSIB das komprimierte asymptotische RSIB mit Hilfe der folgenden Formel berechnet:

$$RSIB_{\text{komprimiert}} = -\lambda \ln\left(\frac{L}{NN_S} \sum_{i=0}^{F-1} \sum_{j=0}^{T-1} e^{-\frac{\gamma(i,j)}{\lambda}}\right) .$$

worin:

   - $\lambda$ ein dem Empfänger von vorn herein bekannter Skalar ist, der von der Modulation und der Codierung abhängt,
   - L der Spreizfaktor ist, $L = S_F x S_T$,
   - i und j positive ganze Zahlen sind und
   - $\gamma(i, j)$ das asymptotische RSIB des i-ten Unterbandes und des j-ten Blocks von $S_T$ OFDM-Symbolen ist.

3. Verfahren nach Anspruch 2, **dadurch gekennzeichnet, dass** man im Schritt (84) der Berechnung des komprimierten asymptotischen RSIB das komprimierte asymptotische RSIB iterativ berechnet, indem man die folgende Annäherung verwendet:

$$\ln(e^a + e^b) \approx \max(a,b) + f_c(|a - b|)$$

worin $f_c(|a-b|)$ eine vorberechnete Tabelle ist, die nur von $(|a-b|)$ abhängt und sich der Funktion $\ln(1 + e^{-|a-b|})$ annähert.

4. Verfahren nach Anspruch 1, 2 oder 3, **dadurch gekennzeichnet, dass** der Wählschritt (86) darin besteht, dass eine erschöpfende Suche nach dem Paar von Frequenz- und Zeitspreizparametern ($S_F$, $S_T$) vorgenommen wird, das den Wert des komprimierte asymptotischen RSIB maximiert.

5. Verfahren nach Anspruch 1, 2 oder 3, **dadurch gekennzeichnet, dass** der Wählschritt (86) darin besteht, dass eine Suchmethode durch goldenen Schnitt angewandt wird.

6. Verfahren nach Anspruch 1, 2 oder 3, **dadurch gekennzeichnet, dass** der Wählschritt (86) darin besteht, dass eine Optimierungsmethode unter Belastung angewandt wird, die die Technik des Lagrange-Multiplikators benutzt, worin die Belastung sich $g(S_F, S_T) = S_F S_T - L$ schreibt, wobei $S_F$ der Frequenzspreizparameter ist, $S_T$ der Zeitspreizparameter ist und L der Spreizungsfaktor ist.

7. Verfahren nach einem der vorhergehenden Ansprüche, das in Verbindung mit einem Empfänger eingesetzt wird, der einen Einzelbenutzer-MMSE-Entzerrer (Minimierung des mittleren quadratischen Fehlers, englisch "Minimum Mean Square Error") umfasst, **dadurch gekennzeichnet, dass** das asymptotische RSIB $\gamma(i,j)$ des i-ten Unterbands und des j-ten Blocks von $S_T$ OFDM-Symbolen bei $i = 0,..., F-1$ und $j = 0, ..., T-1$, durch die folgende Formel definiert ist:

$$\gamma(i,j) = \frac{p_0 \cdot \eta^2(i,j)}{\alpha \overline{p}\left[\dfrac{1}{L}\sum_{p=0}^{S_F-1}\sum_{k=0}^{S_T-1}\dfrac{\left|h_{jS_T+k}[i\cdot S_F+p]\right|^4}{\left(\left|h_{jS_T+k}[i\cdot S_F+p]\right|^2+\mu\right)^2} - \eta^2(i,j)\right] + \dfrac{\sigma^2}{L}\sum_{p=0}^{S_F-1}\sum_{k=0}^{S_T-1}\dfrac{\left|h_{jS_T+k}[i\cdot S_F+p]\right|^2}{\left(\left|h_{jS_T+k}[i\cdot S_F+p]\right|^2+\mu\right)^2}}$$

worin

$$\begin{cases} \eta(i,j) = \dfrac{1}{L}\sum_{p=0}^{S_F-1}\sum_{k=0}^{S_T-1}\dfrac{\left|h_{jS_T+k}[i\cdot S_F+p]\right|^2}{\left|h_{jS_T+k}[i\cdot S_F+p]\right|^2+\mu} \\[4mm] \mu = \dfrac{\sigma^2}{\alpha\dfrac{1}{K}\sum_{i=0}^{K-1}p_i} \\[4mm] \overline{p} = \dfrac{1}{K-1}\sum_{i=1}^{K-1}p_i \end{cases}$$

worin:

- $p_0$ die Leistung des Signals ist, die durch den Spreizcode gespreizt wurde, dessen RSIB bestimmt werden soll,
- L der Spreizfaktor ist: $L = S_F x S_T$,
- $\alpha = K/L$ die Ladung des Systems ist, wobei K die Anzahl von übertragenen Spreizcodes ist,
- $\overline{p}$ die mittlere Leistung der interferierenden Spreizcodes ist und die $p_i$ die Leistungen der interferierenden Spreizcodes sind, wobei $i \neq 0$,
- p und k positive ganze Zahlen sind,
- $h_{j.S_T+k}[i.S_F + p]$ die Dämpfung des Fortpflanzungskanals bei dem $(i.S_F+p)$-ten Unterträger des $(j.S_T+k)$-ten OFDM-Symbols ist, und
- $\sigma^2$ die Varianz des Rauschens ist.

8. Verfahren nach dem vorhergehenden Anspruch, bei dem $\dfrac{1}{K-1}\sum_{i=1}^{K-1}p_i = \dfrac{1}{K}\sum_{i=0}^{K-1}p_i$ gilt, worin K die Zahl von übertragenen Spreizcodes ist und die $p_i$, wobei $i \neq 0$, die Leistungen der interferierenden Spreizcodes sind, **dadurch gekennzeichnet, dass** das asymptotische RSIB durch die folgende Beziehung definiert ist:

$$\gamma(i,j) = \frac{p_0 \cdot \eta(i,j)}{\alpha \bar{p}(1 - \eta(i,j))}$$

worin

$$\begin{cases} \eta(i,j) = \dfrac{1}{L} \sum_{p=0}^{S_F-1} \sum_{k=0}^{S_T-1} \dfrac{\left|h_{j \cdot S_T+k}[i \cdot S_F + p]\right|^2}{\left|h_{j \cdot S_T+k}[i \cdot S_F + p]\right|^2 + \mu} \\[2mm] \mu = \dfrac{\sigma^2}{\alpha \bar{p}} \\[2mm] \bar{p} = \dfrac{1}{K-1} \sum_{i=1}^{K-1} p_i \end{cases}$$

in der:

- $p_0$ die Leistung des Signals ist, das durch den Spreizcode gespreizt ist, dessen RSIB bestimmt werden soll,
- L der Spreizfaktor ist: $L = S_F x S_T$,
- $\alpha = K/ L$ die Ladung des Systems ist,
- $\bar{p}$ die mittlere Leistung der interferierenden Spreizcodes ist,
- p und k positive ganze Zahlen sind,
- $h_{j \cdot S_T+k}[i \cdot S_F + p]$ die Dämpfung des Fortpflanzungskanals bei dem $(i \cdot S_F+p)$-ten Unterträger des $(j \cdot S_T+k)$-ten OFDM-Symbols ist, und
- $\sigma^2$ die Varianz des Rauschens ist.

**9.** Verfahren nach einem der Ansprüche 1 bis 6, das in Verbindung mit einem Empfänger eingesetzt wird, der einen MRC-Entzerrer (Kombination mit maximalen Verhältnis, englisch "Maximum Ratio Combining") umfasst, **dadurch gekennzeichnet, dass** das asymptotische RSIB $\gamma(i,j)$ des i-ten Unterbands des j-ten Blocks von $S_T$ OFDM-Symbolen bei i = 0, ..., F-1 und j = 0, ..., T-1, durch die folgende Formel definiert ist:

$$\gamma(i,j) = \frac{p_0 \cdot \eta^2(i,j)}{\alpha \bar{p}\left(\dfrac{1}{L} \sum_{p=0}^{S_F-1} \sum_{k=0}^{S_T-1} \left|h_{j \cdot S_T+k}[i \cdot S_F + p]\right|^4 - \eta^2(i,j)\right) + \sigma^2 \eta(i,j)}$$

mit

$$\eta(i,j) = \frac{1}{L} \sum_{p=0}^{S_F-1} \sum_{k=0}^{S_T-1} \left|h_{j \cdot S_T+k}[i \cdot S_F + p]\right|^2 ,$$

worin:

- $p_0$ die Leistung des Signals ist, das durch den Spreizcode gespreizt wurde, dessen RSIB bestimmt werden soll,

- L der Spreizfaktor ist: $L = S_F x S_T$,
- $\alpha = K/L$ die Ladung des Systems ist, wobei K die Anzahl von übertragenen Spreizcodes ist,
- $\bar{p}$ die mittlere Leistung der interferierenden Spreizcodes ist,
- p und k positive ganze Zahlen sind,
- $h_{j.S_T+k}$ [i.$S_F$ + p] die Dämpfung des Fortpflanzungskanals bei dem (i.$S_F$+p)-ten Unterträger des (j.$S_T$+k)-ten OFDM-Symbols ist, und
- $\sigma^2$ die Varianz des Rauschens ist.

**10.** Verfahren nach einem der Ansprüche 1 bis 6, das in Verbindung mit einem Empfänger eingesetzt wird, der einen Einzelbenutzer-MMSE-Entzerrer (Minimierung des mittleren quadratischen Fehlers, englisch "Minimum Mean Square Error") umfasst, **dadurch gekennzeichnet, dass** das asymptotische RSIB $\gamma(i, j)$ des i-ten Unterträgers des j-ten Blocks von $S_T$ OFDM-Symbolen, bei i = 0, ..., F-1 und j = 0, ..., T-1, die Lösung der folgenden impliziten Gleichung ist:

$$1 = \frac{1}{L} \sum_{p=0}^{S_F-1} \sum_{k=0}^{S_T-1} \frac{1}{\frac{\sigma^2}{\left|h_{j.S_T+k}[i \cdot S_F + p]\right|^2} A(\alpha, p_k, \gamma(i,j)) + \alpha \cdot B(\alpha, p_k, \gamma(i,j))}$$

worin:

- L der Spreizfaktor ist: $L = S_F x S_T$,
- $\alpha = K/L$, K die Anzahl von übertragenen Spreizcodes ist,
- p und k positive ganze Zahlen sind,
- $h_{j.S_T+k}$ [i.$S_F$ + p] die Dämpfung des Fortpflanzungskanals bei dem (i.$S_F$+p)-ten Unterträger des (j.$S_T$+k)-ten OFDM-Symbols ist, und
- $\sigma^2$ die Varianz des Rauschens ist,
- $p_k$ die an den k-ten Benutzer angelegte Leistung ist, und:

$$A(\alpha, p_k, \gamma(i,j)) = (1-\alpha)\frac{\gamma(i,j)}{p_k} + \alpha \cdot \gamma(i,j) \cdot m(p_k, \gamma(i,j))$$

$$B(\alpha, p_k, \gamma(i,j)) = 1 - p_k \cdot m(p_k, \gamma(i,j))$$

$$m(p_k, \gamma(i,j)) = \int_{-\infty}^{+\infty} \frac{\mu_{power}(u)}{p_k + \gamma(i,j) \cdot u} du$$

worin $\mu_{power}(p)$ die Grenzverteilung der Leistung ist, wenn L und K nach Unendlich gehen und $\alpha = K/L$ konstant bleibt.

**11.** Verfahren nach einem der Ansprüche 1 bis 6, das in Verbindung mit einem Empfänger eingesetzt wird, der einen EGC-Entzerrer (Kombination mit identischem Gewinn, englisch "Equal Gain Combining") umfasst, **dadurch gekennzeichnet, dass** das asymptotische RSIB $\gamma(i,j)$ des i-ten Unterbands des j-ten Blocks von $S_T$ OFDM-Symbolen, bei i = 0, ..., F-1 und j = 0, ..., T-1, durch die folgende Formel definiert ist:

$$\gamma(i,j) = \frac{p_0 \cdot \eta^2(i,j)}{\alpha \overline{p}\left(\frac{1}{L}\sum_{p=0}^{S_F-1}\sum_{k=0}^{S_T-1}\left|h_{jS_T+k}[i \cdot S_F + p]\right|^2 - \eta^2(i,j)\right) + \sigma^2}$$

mit

$$\eta(i,j) = \frac{1}{L}\sum_{p=0}^{S_F-1}\sum_{k=0}^{S_T-1}\left|h_{jS_T+k}[i \cdot S_F + p]\right|,$$

worin:

- $p_0$ die Leistung des Signals ist, das durch den Spreizcode gespreizt ist, dessen RSIB bestimmt werden soll,
- L der Spreizfaktor ist: $L = S_F \times S_T$,
- $\alpha$ = K/L die Ladung des Systems ist, wobei K die Anzahl von übertragenen Spreizcodes ist,
- $\overline{p}$ die mittlere Leistung der interferierenden Spreizcodes ist,
- p und k positive ganze Zahlen sind,
- $h_{j.S_T+k}$ [i.$S_F$ + p] die Dämpfung des Fortpflanzungskanals bei dem (i.$S_F$+p)-ten Unterträger des (j.$S_T$+k)-ten OFDM-Symbols ist, und
- $\sigma^2$ die Varianz des Rauschens ist.

12. Vorrichtung zur Wahl der Frequenzspreizparameter ($S_F$) und/oder Zeitspreizparameter ($S_T$) für ein Kommunikationssystem, das einen Sender und einen Empfänger enthält, und eine Quadraturamplitudenmodulation verwendet und eine Technik des Mehrfachzugriffs durch Code-Teilung oder CDMA und eine Multiplexierung mit orthogonaler Frequenzteilung oder OFDM benutzt, bei dem die Domäne der Frequenzen in F = N/$S_F$ Unterbänder von $S_F$-Unterträgern zerschnitten ist, wobei N die Größe der von dem Empfänger verwendeten schnellen Fourier-Transformation ist und $S_F$ der Frequenzspreizparameter ist und die Zeitdomäne in T = $N_S$/$S_T$ Blöcke von $S_T$ OFDM-Symbolen zerschnitten ist, wobei $N_S$ die Anzahl von OFDM-Symbolen ist, die zum Codieren eines Datenblocks verwendet werden, und $S_T$ der Zeitspreizparameter ist, wobei diese Vorrichtung **dadurch gekennzeichnet ist, dass** sie umfasst:

   - Mittel zur Schätzung der Koeffizienten der Dämpfung des Fortpflanzungskanals;
   - Mittel, um für die Menge der F Unterbänder von $S_F$ Unterträgern und der T Blöcke von $S_T$ OFDM-Symbolen mindestens ein a-symptotisches Verhältnis Signal zu Interferenz + Rauschen (RSIB) aus den Koeffizienten der Dämpfung des Fortpflanzungskanals und dem von dem Empfänger verwendeten Entzerrertyp zu bestimmen;
   - Rechenmittel (70), um für jeden nach der Modulation erhaltenen codierten Informationsblock daraus das asymptotische komprimierte Verhältnis Signal zu Interferenz + Rauschen abzuleiten, das durch eine analytische Formel ausgedrückt wird, die von diesen Frequenzspreizparametern ($S_F$) und Zeitspreizparametern ($S_T$) abhängt; und
   - Mittel zum Wählen dieser Frequenzspreizparameter ($S_F$) und Zeitspreizparameter ($S_T$), die den Wert des komprimierten asymptotischen Verhältnisses Signal zu Interferenz plus Rauschen maximieren.

13. Vorrichtung nach Anspruch 12, **dadurch gekennzeichnet, dass** die Mittel (70) zur Berechnung des komprimierten asymptotischen RSIB dafür ausgelegt sind, das komprimierte asymptotische RSIB mit Hilfe der folgenden Formel zu berechnen:

$$\mathrm{RSIB_{komprimiert}} =$$

$$= -\lambda \ln\left(\frac{L}{NN_S}\sum_{i=0}^{F-1}\sum_{j=0}^{T-1}e^{-\frac{\gamma(i,j)}{\lambda}}\right)$$

worin:

- $\lambda$ ein von dem Empfänger im Voraus bekannter Skalar ist, der von der Modulation und der Codierung abhängt,
- L der Spreizfaktor ist, $L = S_F x S_T$,
- i und j positive ganze Zahlen sind und
- $\gamma$(i, j) das asymptotische RSIB des i-ten Unterbandes des j-ten Blocks von $S_T$ OFDM-Symbolen ist.

**14.** Vorrichtung nach Anspruch 13, **dadurch gekennzeichnet, dass** die Mittel (70) zur Berechnung des komprimierten asymptotischen RSIB dafür ausgelegt sind, das komprimierte asymptotische RSIB iterativ unter Verwendung der folgenden Annäherung zu berechnen:

$$\ln\left(e^a + e^b\right) \approx \max(a,b) + f_c\left(|a - b|\right)$$

worin $f_c(|a-b|)$ eine vorberechnete Tabelle ist, die nur von ($|a-b|$) abhängt und die Funktion $\ln(1 +e^{-|a-b|})$ annähert.

**15.** Vorrichtung nach Anspruch 12, 13 oder 14, **dadurch gekennzeichnet, dass** die Wählmittel dafür ausgelegt sind, eine erschöpfende Suche des Paars von Frequenz- und Zeitspreizparametern ($S_F$, $S_T$) vorzunehmen, das den Wert des komprimierten asymptotischen RSIB maximiert.

**16.** Vorrichtung nach Anspruch 12, 13 oder 14, **dadurch gekennzeichnet, dass** die Wählmittel dafür ausgelegt sind, eine Suchmethode durch den goldenen Schnitt anzulegen.

**17.** Vorrichtung nach Anspruch 12, 13 oder 14, **dadurch gekennzeichnet, dass** die Wählmittel dafür ausgelegt sind, eine Optimierungsmethode unter Belastung anzulegen, die die Technik des Lagrange-Multiplikators benutzt, wobei die Belastung sich $g(S_F,S_T) = S_F S_T - L$ schreibt, worin $S_F$ der Frequenzspreizparameter, $S_T$ der Zeitspreizparameter und L der Spreizfaktor ist.

**18.** Vorrichtung nach einem der Ansprüche 12 bis 17, die in Verbindung mit einem Empfänger eingesetzt ist, der einem Einzelbenutzer-MMSE-Entzerrer (Minimierung des mittleren quadratischen Fehlers, englisch "Minimum Mean Square Error") umfasst, **dadurch gekennzeichnet, dass** das asymptotische RSIB $\gamma$(i,j) des i-ten Unterbands des j-ten Blocks von $S_T$ OFDM-Symbolen bei i = 0, ..., F-1 und j = 0, ..., T-1, durch die folgende Formel definiert ist:

$$\gamma(i,j) = \frac{p_0 \cdot \eta^2(i,j)}{\alpha \bar{p}\left(\frac{1}{L}\sum_{p=0}^{S_F-1}\sum_{k=0}^{S_T-1}\frac{\left|h_{jS_T+k}[i\cdot S_F+p]\right|^4}{\left(\left|h_{jS_T+k}[i\cdot S_F+p]\right|^2+\mu\right)^2} - \eta^2(i,j)\right) + \frac{\sigma^2}{L}\sum_{p=0}^{S_F-1}\sum_{k=0}^{S_T-1}\frac{\left|h_{jS_T+k}[i\cdot S_F+p]\right|^2}{\left(\left|h_{jS_T+k}[i\cdot S_F+p]\right|^2+\mu\right)^2}}$$

worin

$$\begin{cases} \eta(i,j) = \dfrac{1}{L}\sum_{p=0}^{S_F-1}\sum_{k=0}^{S_T-1}\dfrac{\left|h_{jS_T+k}[i\cdot S_F+p]\right|^2}{\left|h_{jS_T+k}[i\cdot S_F+p]\right|^2+\mu} \\[4mm] \mu = \dfrac{\sigma^2}{\alpha\dfrac{1}{K}\sum_{l=0}^{K-1}p_l} \\[4mm] \bar{p} = \dfrac{1}{K-1}\sum_{l=1}^{K-1}p_l \end{cases}$$

worin:

- $p_0$ die Leistung des Signals ist, das durch den Spreizcode gespreizt ist, dessen RSIB bestimmt werden soll,
- L der Spreizfaktor ist: $L = S_F x S_T$,
- $\alpha = K/L$ die Ladung des Systems ist, wobei K die Anzahl von übertragenen Spreizcodes ist,
- $\overline{p}$ die mittlere Leistung der interferierenden Spreizcodes ist und die $p_i$ die Leistungen der interferierenden Spreizcodes sind, wobei $i \neq 0$,
- p und k positive ganze Zahlen sind,
- $h_{j.S_T+k}$ [$i.S_F + p$] die Dämpfung des Fortpflanzungskanals bei dem ($i.S_F+p$)-ten Unterträger des ($j.S_T+k$)-ten OFDM-Symbols ist, und
- $\sigma^2$ die Varianz des Rauschens ist.

**19.** Vorrichtung nach dem vorhergehenden Anspruch, bei der $\dfrac{1}{K-1}\sum\limits_{i=1}^{K-1} p_i = \dfrac{1}{K}\sum\limits_{i=0}^{K-1} p_i$ worin K die Anzahl von übertragenen Spreizcodes ist und die $p_i$, wobei $i \neq 0$, die Leistungen der interferierenden Spreizcodes sind, **dadurch gekennzeichnet, dass** das asymptotische RSIB durch die folgende Beziehung definiert ist:

$$\gamma(i,j) = \frac{p_0 \cdot \eta(i,j)}{\alpha \overline{p}(1 - \eta(i,j))}$$

worin

$$\begin{cases} \eta(i,j) = \dfrac{1}{L}\sum\limits_{p=0}^{S_T-1}\sum\limits_{k=0}^{S_T-1} \dfrac{\left|h_{j.S_T+k}[i \cdot S_F + p]\right|^2}{\left|h_{j.S_T+k}[i \cdot S_F + p]\right|^2 + \mu} \\[4mm] \mu = \dfrac{\sigma^2}{\alpha \overline{p}} \\[4mm] \overline{p} = \dfrac{1}{K-1}\sum\limits_{i=1}^{K-1} p_i \end{cases}$$

worin:

- $p_0$ die Leistung des Signals ist, das durch den Spreizcode gespreizt ist, dessen RSIB bestimmt werden soll,
- L der Spreizfaktor ist: $L = S_F x S_T$,
- $\alpha = K/L$ die Ladung des Systems ist,
- $\overline{p}$ die mittlere Leistung der interferierenden Spreizcodes ist,
- p und k positive ganze Zahlen sind,
- $h_{jS_T+k}$ [$i.S_F + p$] die Dämpfung des Fortpflanzungskanals bei dem ($i.S_{F+}p$)-ten Unterträger des ($j.S_T+k$)-ten OFDM-Symbols ist, und
- $\sigma^2$ die Varianz des Rauschens ist.

**20.** Vorrichtung nach einem der Ansprüche 12 bis 17, die in Verbindung mit einem Empfänger eingesetzt ist, der einen MRC-Entzerrer (Kombination mit Maximumverhältnis, englisch "Maximum Ratio Combining") umfasst, **dadurch gekennzeichnet, dass** das asymptotische RSIB $\gamma(i,j)$ des i-ten Unterbands des j-ten Blocks von $S_T$ OFDM-Symbolen, bei $i = 0, ..., F-1$ und $j = 0, ..., T-1$, durch die folgende Formel definiert ist:

$$\gamma(i,j) = \frac{p_0 \cdot \eta^2(i,j)}{\alpha \bar{p}\left(\dfrac{1}{L}\displaystyle\sum_{p=0}^{S_F-1}\sum_{k=0}^{S_T-1}\left|h_{j.S_T+k}[i\cdot S_F + p]\right|^4 - \eta^2(i,j)\right) + \sigma^2\eta(i,j)}$$

mit:

$$\eta(i,j) = \frac{1}{L}\sum_{p=0}^{S_F-1}\sum_{k=0}^{S_T-1}\left|h_{j.S_T+k}[i\cdot S_F + p]\right|^2,$$

worin:

- $p_0$ die Leistung des Signals ist, das durch den Spreizcode gespreizt ist, dessen RSIB bestimmt werden soll,
- L der Spreizfaktor ist: $L = S_F x S_T$,
- $\alpha = K/L$ die Ladung des Systems ist, wobei K die Anzahl von übertragenen Spreizcodes ist,
- $\bar{p}$ die mittlere Leistung der interferierenden Spreizcodes ist,
- p und k positive ganze Zahlen sind,
- $h_{j.ST+k}$ [$i.S_F + p$] die Dämpfung des Fortpflanzungskanals bei dem ($i.S_F+p$)-ten Unterträger des ($j.S_T+k$)-ten OFDM-Symbols ist, und
- $\sigma^2$ die Varianz des Rauschens ist.

21. Vorrichtung nach einem der Ansprüche 12 bis 17, die in Verbindung mit einem Empfänger eingesetzt ist, der einen Mehrfachbenutzer-MMSE-Entzerrer (Minimierung des mittleren quadratischen Fehlers, englisch "Minimum Mean Square Error") umfasst, **dadurch gekennzeichnet, dass** das asymptotische RSIB $\gamma(i,j)$ des i-ten Unterbands des j-ten Blocks von $S_T$ OFDM-Symbolen, bei i = 0, ..., F-1 und j = 0, ..., T-1, die Lösung der folgenden impliziten Gleichung ist:

$$1 = \frac{1}{L}\sum_{p=0}^{S_F-1}\sum_{k=0}^{S_T-1}\frac{1}{\dfrac{\sigma^2}{\left|h_{j.S_T+k}[i\cdot S_F + p]\right|^2}A(\alpha,p_k,\gamma(i,j)) + \alpha \cdot B(\alpha,p_k,\gamma(i,j))}$$

worin:

- L der Spreizfaktor ist: $L = S_F x S_T$,
- $\alpha = K/L$, wobei K die Anzahl von übertragenen Spreizcodes ist,
- p und k positive ganze Zahlen sind,
- $h_{j.ST+k}$ [$i.S_F + p$] die Dämpfung des Fortpflanzungskanals bei dem ($i.S_F+p$)-ten Unterträger des ($j.S_T+k$)-ten OFDM-Symbols ist, und
- $\sigma^2$ die Varianz des Rauschens ist,
- $p_k$ die an den k-ten Benutzer angelegte Leistung ist, und:

$$A(\alpha,p_k,\gamma(i,j)) = (1-\alpha)\frac{\gamma(i,j)}{p_k} + \alpha \cdot \gamma(i,j) \cdot m(p_k,\gamma(i,j))$$

$$B(\alpha,p_k,\gamma(i,j)) = 1 - p_k \cdot m(p_k,\gamma(i,j))$$

$$m(p_k, \gamma(i,j)) = \int_{-\infty}^{+\infty} \frac{\mu_{power}(u)}{p_k + \gamma(i,j) \cdot u} du$$

worin $\mu_{power}(p)$ die Grenzverteilung der Leistung ist, wenn L und K nach Unendlich gehen und $\alpha = K/L$ konstant bleibt.

22. Vorrichtung nach einem der Ansprüche 12 bis 17, die in Verbindung mit einem Empfänger eingesetzt ist, der einen EGC-Entzerrer (Kombination mit identischem Gewinn, englisch "Equal Gain Combining") umfasst, **dadurch gekennzeichnet, dass** das asymptotische RSIB $\gamma(i,j)$ des i-ten Unterbands des j-ten Blocks von $S_T$ OFDM-Symbolen bei i = 0, ..., F-1 und j = 0, ..., T-1 durch die folgende Formel definiert ist:

$$\gamma(i,j) = \frac{p_0 \cdot \eta^2(i,j)}{\alpha \bar{p}\left(\frac{1}{L}\sum_{p=0}^{S_F-1}\sum_{k=0}^{S_T-1}\left|h_{jS_T+k}[i \cdot S_F + p]\right|^2 - \eta^2(i,j)\right) + \sigma^2}$$

mit:

$$\eta(i,j) = \frac{1}{L}\sum_{p=0}^{S_F-1}\sum_{k=0}^{S_T-1}\left|h_{jS_T+k}[i \cdot S_F + p]\right|.$$

worin:

- $p_0$ die Leistung des Signals ist, das durch den Spreizcode gespreizt ist, dessen RSIB bestimmt werden soll,
- L der Spreizfaktor ist: $L = S_F x S_T$,
- $\alpha = K/L$ die Ladung des Systems ist, wobei K die Anzahl von übertragenen Spreizcodes ist,
- $\bar{p}$ die mittlere Leistung der interferierenden Spreizcodes ist,
- p und k positive ganze Zahlen sind,
- $h_{j.S_T+k}[i.S_F + p]$ die Dämpfung des Fortpflanzungskanals bei dem $(i.S_F+p)$-ten Unterträger des $(j.S_T+k)$-ten OFDM-Symbols ist, und
- $\sigma^2$ die Varianz des Rauschens ist.

23. Einheit zur Simulation eines Mobilfunksystems, **dadurch gekennzeichnet, dass** sie dafür ausgelegt ist, ein Verfahren zur Wahl der Spreizparameter gemäß einem der Ansprüche 1 bis 11 einzusetzen.

24. Einheit zur Simulation eines Mobilfunksystems, **dadurch gekennzeichnet, dass** sie eine Vorrichtung zur Wahl der Spreizparameter nach einem der Ansprüche 12 bis 22 umfasst.

25. Drahtlose Mobilfernsprechvorrichtung, **dadurch gekennzeichnet, dass** sie dafür ausgelegt ist, ein Verfahren zur Wahl der Spreizparameter nach einem der Ansprüche 1 bis 11 einzusetzen.

26. Drahtlose Mobilfernsprechvorrichtung, **dadurch gekennzeichnet, dass** sie eine Vorrichtung zur Wahl der Spreizparameter nach einem der Ansprüche 12 bis 22 einsetzt.

FIG. 1

FIG. 2

FIG. 3

temps

$S_F$

fréquence

FIG. 4

$n^{ième}$ symbole
OFDM

temps

fréquence

$S_T$

$S_T$

temps

$S_F$

FIG. 5

fréquence

FIG. 6

FIG. 7

FIG. 8

FIG. 9

FIG. 10

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W. ZHENDAO ; G. B. GIANNAKIS.** Wireless Multicarrier Communications - Where Fourier meets Shannon. *IEEE Signal Processing Magazine,* Mai 2000, vol. 17 (3), 29-48
- **N. MAEDA ; Y. KISHIYAMA ; H. ATARASHI ; M. SAWAHASHI.** Variable Spreading Factor OFCDM with two dimensional spreading that prioritizes time domain spreading for forward link broadband wireless access. *VTC Spring,* 2003, 127-132
- **N. MAEDA ; Y. KISHIYAMA ; K. HIGUCHI ; H. ATARASHI ; M. SAWAHASHI.** Experimental Evaluation of Throughput Performance in Broadband Packet Wireless Access Based on VSF-OFCDM and VSD-CDMA. *IEEE PIMRC,* 2003, 6-11

- **W. H. PRESS ; B. P. FLANNERY ; S. A. TEUKOLSKY ; W. T. VETTERLING.** Numerical Recipes in C. Cambridge Press University, 1988, 397-402
- **P. ROBERTSON ; P. HOEHER ; E. VILLEBRUN.** Optimal and sub-optimal maximum a posteriori algorithms suitable for turbo-decoding. *European Transactions on Telecommunications,* 1997, 119-125